(19) Europäisches Patentamt
European Patent Office
Office européen des brevets

(11) **EP 4 691 600 A1**

(12) **EUROPEAN PATENT APPLICATION**
published in accordance with Art. 153(4) EPC

(43) Date of publication:
**11.02.2026 Bulletin 2026/07**

(21) Application number: **24780505.4**

(22) Date of filing: **27.03.2024**

(51) International Patent Classification (IPC):
**B01D 53/047** (2006.01)    **B01J 20/18** (2006.01)
**B01J 20/34** (2006.01)    **C01B 32/50** (2017.01)

(52) Cooperative Patent Classification (CPC):
**B01D 53/047; B01J 20/18; B01J 20/34;
C01B 32/50;** Y02C 20/40

(86) International application number:
**PCT/JP2024/012358**

(87) International publication number:
**WO 2024/204403 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2023 JP 2023052352**

(71) Applicant: **Asahi Kasei Kabushiki Kaisha
Tokyo 1000006 (JP)**

(72) Inventors:
• **OKUBO, Atsushi
Tokyo 100-0006 (JP)**
• **AKAOGI, Takayuki
Tokyo 100-0006 (JP)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **GAS SEPARATION APPARATUS, METHOD FOR MANAGING GAS SEPARATION APPARATUS, GAS SEPARATION METHOD, AND METHOD FOR PRODUCING PURIFIED GAS**

(57)    A gas separation apparatus that separates carbon dioxide from a mixed gas containing the carbon dioxide, the gas separation apparatus including:
an adsorption column packed with an adsorbent that adsorbs the carbon dioxide,
a mixed gas supply line that introduces the mixed gas into the adsorption column;
a carbon dioxide recovery line that extracts the carbon dioxide from the adsorption column;
a pressure reducing apparatus that is connected to the carbon dioxide recovery line; and
a pressure difference measurement section that measures a pressure loss ΔP due to the adsorption column.

[Figure 1]

EP 4 691 600 A1

**Description**

Technical Field

The present invention relates to a gas separation apparatus, a method for managing a gas separation apparatus, a gas separation method, and a method for producing a purified gas.

Background Art

In recent years, a need for separation of carbon dioxide has been expanded for emission reduction of carbon dioxide. While there are some separation methods of carbon dioxide, one thereof is a separation method with an adsorbent. Examples of such a separation method with an adsorbent include a pressure swing-type adsorption-separation method (PSA: Pressure Swing Adsorption) which includes lowering the pressure in desorption of gas as compared with the pressure in adsorption of gas and utilizing the difference between the amount of adsorption at a higher pressure and the amount of adsorption at a lower pressure to perform gas separation, and a temperature swing-type adsorption-separation method (TSA: Thermal Swing Adsorption) which includes raising the temperature in desorption of gas as compared with the temperature in adsorption of gas and utilizing the difference between the amount of adsorption at a lower temperature and the amount of adsorption at a higher temperature to perform gas separation. Furthermore, these methods are combined to provide a pressure-temperature swing-type adsorption-separation method (PTSA: Pressure and Thermal Swing Adsorption).

For example, there has been disclosed as a carbon dioxide production method capable of extracting high-purity methane and high-purity carbon dioxide from biogas, a carbon dioxide production method including separating not only methane, but also carbon dioxide, from biogas, according to a pressure variation adsorption method using an adsorption column packed with an adsorbent (Patent Document 1).

Citation List

Patent Document

Patent Document 1: Japanese Patent Laid-Open No. 2015-67504

Summary of Invention

Technical Problem

Separation and recovery of carbon dioxide from a mixed gas such as biogas are demanded from the viewpoint of emission reduction of carbon dioxide. There is proposed as a method for separating and recovering carbon dioxide, a method with an adsorbent that adsorbs carbon dioxide. In the method, carbon dioxide is adsorbed with an adsorbent obtained by molding of a material that adsorbs carbon dioxide, from the viewpoint of ease of handling. It has been revealed that, in a case where an adsorbent is actually produced to adsorb carbon dioxide, such an adsorbent is embrittled to cause generation of a powder. This powder leads to the pressure loss in an apparatus, an increase in ultimate pressure during pressure reduction, and a reduction in separation and recovery efficiency of carbon dioxide. A problem is also that the powder generated flows into a pressure reducing apparatus to cause an increase in load of maintenance and management of the pressure reducing apparatus.

The present invention then provides a gas separation apparatus, a method for managing a gas separation apparatus, a gas separation method, and a method for producing a purified gas, in which an adsorbent can be managed.

Solution to Problem

The present invention encompasses the following embodiments.

<1> A gas separation apparatus that separates carbon dioxide from a mixed gas comprising the carbon dioxide, the gas separation apparatus comprising:

an adsorption column packed with an adsorbent that adsorbs the carbon dioxide;

a mixed gas supply line that introduces the mixed gas into the adsorption column;

a carbon dioxide recovery line that extracts the carbon dioxide from the adsorption column;

a pressure reducing apparatus that is connected to the carbon dioxide recovery line; and

a pressure difference measurement section that measures a pressure loss $\Delta P$ due to the adsorption column.

<2> The gas separation apparatus according to <1>, wherein the carbon dioxide recovery line has a powder removal section between the adsorption column and the pressure reducing apparatus.
<3> The gas separation apparatus according to <1> or <2>, further comprising a management section, wherein the management section has:

a determination section that determines whether the pressure loss $\Delta P$ exceeds a predetermined value; and
an output section that outputs state information of the adsorbent in a case where the pressure loss $\Delta P$ exceeds the predetermined value in the determination section.

<4> The gas separation apparatus according to <3>, wherein the pressure loss $\Delta P$ corresponds to a pressure loss $\Delta Pf$ during mixed gas introduction.
<5> The gas separation apparatus according to <4>, wherein the pressure difference measurement section measures
the pressure loss $\Delta Pf$ from a pressure difference between a pressure $P_1$ of the adsorption column on a side of the mixed gas supply line and a pressure $P_2$ of the adsorption column on an opposite side of the mixed gas supply line.
<6> The gas separation apparatus according to <4> or <5>, wherein the predetermined value is 50 kPa or less.
<7> The gas separation apparatus according to <3>, wherein the pressure loss $\Delta P$ corresponds to a pressure loss $\Delta Pr$ during pressure reduction.
<8> The gas separation apparatus according to <7>, wherein the pressure difference measurement section measures
the pressure loss $\Delta Pr$ from a pressure difference between a pressure $P_3$ of the adsorption column on a side of the carbon dioxide recovery line and a pressure $P_4$ of the adsorption column on an opposite side of the carbon dioxide recovery line.
<9> The gas separation apparatus according to <7> or <8>, wherein the predetermined value is 10 kPa or less.
<10> The gas separation apparatus according to <3>, wherein the pressure loss $\Delta P$ corresponds to a pressure loss $\Delta Pf$ during mixed gas introduction and a pressure loss $\Delta Pr$ during pressure reduction.
<11> The gas separation apparatus according to <10>, wherein the pressure difference measurement section measures:

the pressure loss $\Delta Pf$ from a pressure difference between a pressure $P_1$ of the adsorption column on a side of the mixed gas supply line and a pressure $P_2$ of the adsorption column on an opposite side of the mixed gas supply line; and
the pressure loss $\Delta Pr$ from a pressure difference between a pressure $P_3$ of the adsorption column on a side of the carbon dioxide recovery line and a pressure $P_4$ of the adsorption column on an opposite side of the carbon dioxide recovery line.

<12> The gas separation apparatus according to <10> or <11>, wherein

the pressure loss $\Delta P$ corresponds to a pressure loss $\Delta Pf$ during mixed gas introduction and a pressure loss $\Delta Pr$ during pressure reduction, and

the output section outputs the state information of the adsorbent in a case where the pressure loss $\Delta Pf$ or the pressure loss $\Delta Pr$ exceeds the predetermined value.

<13> The gas separation apparatus according to any one of <1> to <12>,

wherein the mixed gas comprises a gaseous substance A different from the carbon oxide, and

the gas separation apparatus

comprises a gaseous substance A recovery line that extracts the gaseous substance A from the adsorption column, and

separates the carbon dioxide and the gaseous substance A.

<14> The gas separation apparatus according to any one of <1> to <13>, wherein the adsorbent comprises zeolite.
<15> The gas separation apparatus according to <14>, wherein the zeolite is an FAU-type zeolite or a GIS-type zeolite.
<16> The gas separation apparatus according to any one of <1> to <15>, wherein an adsorption selectivity of the carbon dioxide/the gaseous substance A of the adsorbent is 8 or more.
<17> A method for managing a gas separation apparatus that separates carbon dioxide from a mixed gas comprising the carbon dioxide,

wherein the gas separation apparatus comprises:

an adsorption column packed with an adsorbent that adsorbs the carbon dioxide;

a mixed gas supply line that introduces the mixed gas into the adsorption column;

a carbon dioxide recovery line that extracts the carbon dioxide from the adsorption column;

a pressure reducing apparatus that is connected to the carbon dioxide recovery line;

a pressure difference measurement section that measures a pressure loss $\Delta P$ due to the adsorption column; and

a management section,

wherein the method comprises:

a determination step of determining whether the pressure loss $\Delta P$ exceeds a predetermined value; and
an output step of outputting state information of the adsorbent in a case where the pressure loss $\Delta P$ exceeds the predetermined value in the determination step.

<18> The method for managing the gas separation apparatus according to <17>, wherein the pressure loss $\Delta P$ corresponds to a pressure loss $\Delta P_f$ during mixed gas introduction.
<19> The method for managing the gas separation apparatus according to <18>, wherein the predetermined value is 10 kPa or less.
<20> The method for managing the gas separation apparatus according to <17>, wherein the pressure loss $\Delta P$ corresponds to a pressure loss $\Delta P_r$ during pressure reduction.
<21> The method for managing the gas separation apparatus according to <20>, wherein the predetermined value is 5 kPa or less.
<22> The method for managing the gas separation apparatus according to <17>, wherein the pressure loss $\Delta P$ corresponds to a pressure loss $\Delta P_f$ during mixed gas introduction and a pressure loss $\Delta P_r$ during pressure reduction.
<23> The method for managing the gas separation apparatus according to <17>, wherein the pressure loss $\Delta P$ corresponds to a pressure loss $\Delta P_f$ during mixed gas introduction and a pressure loss $\Delta P_r$ during pressure reduction, and the output step outputs the state information of the adsorbent in a case where the pressure loss $\Delta P_f$ or the pressure loss $\Delta P_r$ exceeds the predetermined value.
<24> A gas separation method for separating carbon dioxide from a mixed gas comprising the carbon dioxide using an adsorption column packed with an adsorbent, the method comprising:

an adsorption step of introducing the mixed gas into the adsorption column to allow the carbon dioxide to be adsorbed onto the adsorbent; and
a desorption step of exhausting the carbon dioxide under reduced pressure from the adsorption column, to extract the carbon dioxide from the adsorbent,

wherein the adsorption step and/ or the desorption step are/is carried out with a pressure loss $\Delta P$ due to the adsorption column being measured.
<25> The gas separation method according to <24>,

wherein the mixed gas comprises a gaseous substance A different from the carbon oxide, and

the gaseous substance A is extracted in the adsorption step.

<26> A method for producing a purified gas, comprising obtaining purified carbon dioxide by the gas separation method according to <24> or <25>.

<27> A method for producing a purified gas, comprising obtaining a purified gaseous substance A by the gas separation method according to <25>.

Advantageous Effect of Invention

According to the present invention, it is possible to provide a gas separation apparatus, a method for managing a gas separation apparatus, a gas separation method, and a method for producing a purified gas, in which an adsorbent can be managed.

Brief Description of Drawings

[Figure 1] Figure 1 illustrates a diagram showing a schematic configuration of a gas separation apparatus 100.

[Figure 2] Figure 2 illustrates a diagram showing a schematic configuration of a powder removal section 6.

[Figure 3] Figure 3 illustrates a conceptual diagram showing the respective changes of pressure variations over time, of a carbon dioxide adsorption column 3a and a carbon dioxide adsorption column 3b, by an action of the gas separation apparatus 100.

[Figure 4] Figure 4 illustrates a block diagram showing a schematic configuration of a management section 45.

[Figure 5] Figure 5 illustrates a block diagram showing one example of a hardware configuration of the management section 45.

[Figure 6] Figure 6 illustrates a flowchart showing one processing flow example in a management method according to the present embodiment.

[Figure 7] Figure 7 illustrates a flowchart showing one processing flow example in the management method according to the present embodiment.

[Figure 8] Figure 8 illustrates a flowchart showing one processing flow example in the management method according to the present embodiment.

[Figure 9] Figure 9 illustrates a flowchart showing one processing flow example in the management method according to the present embodiment.

[Figure 10] Figure 10 illustrates a diagram showing a schematic configuration of a biogas purification system 1000 in which the gas separation apparatus 100 is applied to biogas purification.

Description of Embodiments

Hereinafter, a mode for carrying out the present invention (hereinafter, referred to as "the present embodiment".) is described in detail. The present invention is not limited to the following description, and can be variously modified and carried out within the gist thereof.

A gas separation apparatus according to the present embodiment comprises
a gas separation apparatus that separates carbon dioxide from a mixed gas containing the carbon dioxide, the gas separation apparatus including:

an adsorption column packed with an adsorbent that adsorbs the carbon dioxide;

a mixed gas supply line that introduces the mixed gas into the adsorption column;

a carbon dioxide recovery line that extracts the carbon dioxide from the adsorption column;

a pressure reducing apparatus that is connected to the carbon dioxide recovery line; and

a pressure difference measurement section that measures a pressure loss ΔP due to the adsorption column.

According to above configuration, it is possible to provide a gas separation apparatus, a method for managing a gas separation apparatus, a gas separation method, and a method for producing a purified gas, in which an adsorbent can be managed. It has been revealed that a powder is generated in the course of: physical wear by flowage of an adsorbing material during gas adsorption/desorption; or embrittlement of an adsorbent due to adsorption of carbon dioxide to the adsorbent. It has been found that such powder generation results in a gradual increase in pressure loss in an adsorption column during distribution of a mixed gas or during pressure reduction. A pressure difference measurement section that measures the pressure loss ΔP due to the adsorption column can be then disposed to manage the state of the adsorbent, for example, a state in which the time for replacement of the adsorbent comes.

Hereinafter, an adsorption molded article used for a gas separation apparatus and a mixed gas containing carbon dioxide and a gaseous substance A to be treated with the gas separation apparatus are described, and thereafter a gas separation apparatus and a method for managing a gas separation apparatus according to the present embodiment are described.

<Adsorbent molded article>

A carbon dioxide adsorption column is packed with an adsorbent. The adsorbent used in the present embodiment adsorbs carbon dioxide. A solid adsorbent is preferably used as the adsorbent. More specific examples of the adsorbent include solid adsorbents such as zeolite, a metal-organic framework (MOF), carbonaceous char, activated carbon, carbon black, graphite, silica, silica gel, alumina clay, and metal oxide. In particular, the adsorbent preferably includes zeolite. The adsorbent is also preferably a zeolite molded article.

Examples of the zeolite include a CHA-type zeolite, a GIS-type zeolite, an FAU-type zeolite, an MWF-type zeolite, and an LTA-type zeolite. In particular, an FAU-type zeolite or a GIS-type zeolite is preferred, and a GIS-type zeolite is more preferred.

The GIS-type zeolite may contain silica and alumina. The content of aluminum in the GIS-type zeolite is preferably 1% by mass or more, more preferably 3% by mass or more, further preferably 5% by mass or more. The content of silicon in the GIS-type zeolite is preferably 3% by mass or more, more preferably 5% by mass or more. The upper limits of the contents of aluminum and silicon are preferably set so that SAR described below satisfies a predetermined range, and are defined by the value of SAR.

The GIS-type zeolite preferably contains silica and alumina in a main component. The "main component" is a component occupying 51% by mass or more.

The silica/alumina ratio (which represents the molar ratio of silica and alumina, represented by $SiO_2/Al_2O_3$, and which is hereinafter also referred to as "SAR") in the GIS-type zeolite is preferably 3.40 or more. The GIS-type zeolite exhibits a higher affinity and a stronger adsorption force of a polar molecule like carbon dioxide, as the SAR is lower. While a higher SAR is more preferred because a lower SAR causes a so strong adsorption force that energy necessary for desorption by heating or vacuuming is larger, a so high SAR causes smaller interaction with an adsorbate. The SAR is more preferably 4.40 to 3000, further preferably 4.60 to 500, further preferably 4.80 to 100.

The content of phosphorus in the GIS-type zeolite is preferably 4% by mass or less. The lower limit of the content of phosphorus is not particularly limited, and may be 0% by mass or more.

The content of Zr in the GIS-type zeolite is preferably 8% by mass or less. The lower limit of the content of Zr is not particularly limited, and may be 0% by mass or more.

The content of Ti in the GIS-type zeolite is preferably 8% by mass or less. The lower limit of the content of Ti is not particularly limited, and may be 0% by mass or more.

The content of a phosphorus atom in the zeolite is more preferably 1.5% by mass or less, especially preferably 0% by mass from the viewpoint of a more enhancement in selective adsorption ability of carbon dioxide.

The respective contents of aluminum, silicon, phosphorus, Zr and Ti can be measured by methods described in Examples below. The respective contents of aluminum, silicon, phosphorus, Zr and Ti can be adjusted within the above ranges by, for example, adjusting the compositional ratio or the like of a mixed gel used for synthesis of the GIS-type zeolite.

The cationic species contained in the GIS-type zeolite contains preferably potassium or lithium, more preferably potassium, from the viewpoint of an enhancement in selective adsorption ability of carbon dioxide. The total content of potassium and lithium in the zeolite is calculated as the proportion (Z/T) of the total value (Z) of the molar numbers of potassium and lithium to the total value (T) of the molar numbers of alkali metals in the GIS-type zeolite. The Z/T is preferably 0.05 or more, more preferably 0.10 or more, further preferably 0.15 or more. The upper limit of the Z/T is not particularly limited, and the Z/T may be 1.00 or less. The Z/T can be measured by thermally dissolving the zeolite in an aqueous sodium hydroxide solution or aqua regia and appropriately diluting the resulting solution, and performing ICP-emission spectrochemical analysis with the solution appropriately diluted. The Z/T can be more specifically measured by a method described in Examples below. The Z/T can be adjusted by changing the proportion of potassium and lithium as cationic species of the GIS-type zeolite.

The proportion (K/T) of the total value (K) of the molar number of potassium to the total value (T) of the molar number of each alkali metal in the GIS-type zeolite is preferably 0.05 or more, more preferably 0.10 or more, further preferably 0.15 or more. The upper limit of K/T is not particularly limited, and the K/T may be 1.00 or less.

While a higher SAR is more preferred from the viewpoint of energy necessary for desorption, it is confirmed that, when the SAR in the GIS-type zeolite is higher, adsorption-desorption hysteresis in an adsorption-desorption isotherm of carbon dioxide is exhibited. The binding modes of Si and Al in a zeolite backbone in the GIS-type zeolite can be controlled to eliminate adsorption-desorption hysteresis in an adsorption-desorption isotherm of carbon dioxide. Specifically, when the area intensities of peaks assigned to Q4(3Al), Q4(2Al), Q4(1Al), and Q4(0Al) observed in a $^{29}$Si-MAS-NMR spectrum are respectively designated as a, b, c, and d, $(a + d)/(b + c) \geq 0.192$ is preferably satisfied, more preferably $0.913 \geq (a + d)/(b + c) \geq 0.195$, further preferably $0.519 \geq (a + d)/(b + c) \geq 0.199$ is satisfied. The peaks assigned to Q4(3Al), Q4(2Al), Q4(1Al), and Q4(0Al) observed in a $^{29}$Si-MAS-NMR spectrum represent the binding modes of Si and Al in the zeolite backbone, each of X and Y, representing the sum of area intensities, represents the sum of the amounts of presence of the binding modes, and Z represents the abundance ratio. The abundance ratio of the binding modes of Si and Al has an influence on the change in structure of the zeolite backbone itself at each time of adsorption and desorption, and thus "Z" as the abundance ratio of the binding modes of Si and Al in the zeolite backbone can be within an appropriate range to eliminate adsorption-desorption hysteresis in an adsorption-desorption isotherm.

A $^{29}$Si-MAS-NMR spectrum is obtained by preparing a desiccator where water is put on the bottom, retaining the zeolite placed in a sample tube, on the upper portion in the desiccator at room temperature (25°C) for 48 hours, to perform humidity conditioning treatment, and thereafter performing measurement with a solid-state NMR measurement apparatus. Examples of the solid-state NMR measurement apparatus include "RESONANCE ECA700" manufactured by JEOL Ltd. (magnetic field intensity: 16.44 T (resonant frequency at $^1$H: 700 MHz)).

The GIS-type zeolite in the present embodiment generally shows the following five peaks in a $^{29}$Si-MAS-NMR spectrum.

(1) Q4(0Al): peak assigned to Si not bound with any Al via oxygen

(2) Q4(1Al): peak assigned to Si bound with one Al atom via oxygen

(3) Q4(2Al): peak assigned to Si bound with two Al atoms via oxygen

(4) Q4(3Al): peak assigned to Si bound with three Al atoms via oxygen

(5) Q4(4Al): peak assigned to Si bound with four Al atoms via oxygen

These peak positions in a $^{29}$Si-MAS-NMR spectrum are generally present at - 112 ppm to -80 ppm, and can be assigned to Q4(0Al), Q4(1Al), Q4(2Al), Q4(3Al), and Q4(4Al) from the high magnetic field side. While the peak positions can be changed depending on cationic species present in the zeolite backbone, the peak positions are generally present in the following ranges.

(1) Q4(0Al): -105 ppm to -112 ppm

(2) Q4(1Al): -100 ppm to -105 ppm

(3) Q4(2Al): -95 ppm to -100 ppm

(4) Q4(3Al): -87 ppm to -95 ppm

(5) Q4(4Al): -80 ppm to -87 ppm

The area intensities of the peaks in a $^{29}$Si-MAS-NMR spectrum are obtained by analysis with Gauss and Lorenz functions by use of analysis program dmfit (#202000113 version), and optimization calculation of four parameters of the amplitude (the height of the maximum value in the spectrum), the position (each position in the spectrum, ppm), the width (the full width at half maximum in the spectrum, ppm), and the Gauss/Lorenz ratio (xG/(1 - x)L), according to the algorithm of the least squares method.

The area intensities of peaks obtained by the calculation are used to determine the area intensities a, b, c, and d of peaks assigned to Q4(3Al), Q4(2Al), Q4(1Al), and Q4(0Al).

The $^{29}$Si-MAS-NMR spectrum can be more specifically measured by a method described in Examples below. In order to adjust (a + d)/(b + c) to be within a predetermined range, such adjustment can be made by means such as adding a salt compound containing alkali metal and/or alkali earth metal, and determining the ratio between the amounts of a cation generated by addition of the salt compound, and an aluminum source.

(Binder)

The adsorbent molded article may include a binder. Examples of the binder include an inorganic binder and an organic binder.

Examples of the inorganic binder include inorganic oxides such as alumina, silica, magnesia, zirconia, and titania, clay minerals such as bentonite and kaolin, calcium silicate, and calcium aluminate. Examples of the alumina include $\alpha$-alumina, $\gamma$-alumina, boehmite, pseudo-boehmite, bayerite, gibbsite, and diaspore. Examples of the silica include colloidal silica, liquid glass, fumed silica, silica sol, wet method silica, dry method silica, and natural silica. These inorganic binders may be used singly or in combinations of a plurality thereof. Among these inorganic binders, alumina, silica, magnesia, zirconia, and titania are preferred, and silica and alumina are more preferred from the viewpoint of an increase in strength of the zeolite molded article.

The content of the inorganic binder is preferably 1 to 99% by mass, more preferably 5 to 90% by mass, further preferably 8 to 80% by mass based on the total amount (100% by mass) of the adsorbent molded article.

Examples of the organic binder include cellulose, methylcellulose, carboxymethylcellulose, hydroxyethylcellulose, latex, polyvinyl alcohol, vinyl acetate, polyvinyl acetal, vinyl chloride, acryl, polyamide, urea, melamine, a phenol resin, polyester, polyurethane, polyamide, polybenzimidazole, chloroprene rubber, nitrile rubber, styrene-butadiene rubber, polysulfide, butyl rubber, silicone rubber, acrylic rubber, and urethane rubber. These organic binders may be used singly or in combinations of a plurality thereof. Among these organic binders, cellulose, methylcellulose, carboxymethylcellulose, hydroxyethylcellulose, and polyvinyl alcohol are preferred, and cellulose, methylcellulose, and polyvinyl alcohol are more preferred from the viewpoint of surface binding with the GIS-type zeolite.

The content of the organic binder is preferably 1 to 99% by mass, more preferably 5 to 90% by mass, further preferably 8 to 80% by mass based on the total amount (100% by mass) of the adsorbent molded article.

It is preferable to include one or more of the above inorganic binders and one or more of the above organic binders.

The total content of the binder is preferably 1 to 99% by mass, more preferably 5 to 90% by mass, further preferably 8 to 80% by mass based on the total amount (100% by mass) of the adsorbent molded article. In a case where the content of a binder is higher, the molded article tends to be increased in strength, but tends to result in a reduction in content of the zeolite itself. Therefore, the content of the binder may be adjusted in consideration of the strength, performance, or the like demanded depending on the intended use.

The shape of the adsorbent molded article is not particularly limited, and examples thereof include a spherical shape, a columnar shape, an elliptical shape, a straw bag shape, a three-leaf shape, a ring shape, and a powder shape. In particular, a spherical shape and a columnar shape are further preferred. The size of the molded article is not particularly limited, and is changed depending on a situation in which the molded article is used. For example, in use of a process with the molded article in a state other than a flow state, such as a fixed bed or a movable bed, a columnar shape is preferred which has a length of 3 mm or more and 30 mm or less and a diameter of 1 mm or more and 30 mm or less. The length of the column is more preferably 3 mm or more and 10 mm or less, further preferably 3 mm or more and 8 mm or less. The diameter of the column is more preferably 2 mm or more and 4 mm or less.

The length and the diameter can be determined respectively by measuring the lengths and the diameters of pellets of three samples according to a caliper method with a caliper having a minimum read value of 0.1 mm or less, and defining the respective average values as the length and the diameter, and can be adjusted within the above ranges by an operation such as classification.

The adsorption selectivity of carbon dioxide/gaseous substance A of the adsorbent is preferably 5 or more. The adsorbent thus high in adsorption selectivity of carbon dioxide/gaseous substance A can be used to increase the rate of recovery of the gaseous substance A extracted in the adsorption step once and the purity of the carbon dioxide extracted in the desorption step once.

The adsorption selectivity of the adsorbent is defined as $q(CO_2)/q(GMA)$ under the assumption that the respective amounts of equilibrium adsorption (cm$^3$/gSTP) at 760 mmHg, of the carbon dioxide and the gaseous substance A, obtained by adsorption isotherm measurement are $q(CO_2)$ and $q(GMA)$.

The adsorption selectivity of carbon dioxide/gaseous substance A of the adsorbent is preferably 8 or more, more preferably 13 or more, further preferably 15 or more, still further preferably 20 or more.

The adsorption selectivity of carbon dioxide/gaseous substance A of the adsorbent is measured by a method described in Examples.

[Method for producing adsorbent molded article]

(Preparation step)

The GIS-type zeolite can be obtained by, for example, a production method including a preparation step of a mixed gel that contains a silica source containing silicon, an aluminum source containing aluminum, an alkali source containing at least one selected from alkali metal (M1) and alkali earth metal (M2), a salt compound containing at least one selected from alkali metal (M1) and alkali earth metal (M2), a phosphorus source containing phosphorus, an organic structure-directing agent, and water.

(Hydrothermal synthesis step)

The method for producing the GIS-type zeolite preferably further includes a hydrothermal synthesis step in which the hydrothermal synthesis temperature is 80°C to 200°C. The hydrothermal synthesis temperature is preferably 100°C to 180°C. The hydrothermal synthesis is made by retaining the mixed gel obtained in the preparation step at a predetermined temperature for a predetermined time, in a stirring or still standing state. The time of the hydrothermal synthesis is not particularly limited as long as it is a time generally adopted, and is preferably 3 hours to 30 days, more preferably 10 hours to 20 days, further preferably 24 hours to 10 days.

(Separation/drying step)

After the hydrothermal synthesis step, a solid as a product and water are separated. The separation method is not particularly limited and may be a common method, the method here used can be, for example, filtration, decantation, a spray-drying method (rotary spraying, nozzle spraying, ultrasonic atomization, and the like), a drying method with a rotary evaporator, a vacuum-drying method, a freeze-drying method, or a natural drying method, and such separation can be usually made by filtration or decantation.

(Calcining step)

The method for producing the GIS-type zeolite preferably further includes a calcining step in which the calcining temperature is 300°C to 450°C. The calcining temperature is more preferably 350°C to 420°C, further preferably 360°C to 400°C. The calcining time may be 0.5 hours to 10 days, 1 hour to 7 days, or 3 hours to 5 days. The calcining atmosphere is not particularly limited as long as it is an atmosphere generally adopted, and an air atmosphere, or an atmosphere to which an inert gas such as nitrogen or argon, or oxygen is added is usually adopted.

(Cation exchange step)

The method for producing the GIS-type zeolite preferably further includes a cation exchange step. The cation exchange can be made with, without limitation to the following, for example, carbonate such as sodium carbonate, potassium carbonate, lithium carbonate, rubidium carbonate, cesium carbonate, magnesium carbonate, calcium carbonate, strontium carbonate, barium carbonate or ammonium carbonate, nitrate such as sodium nitrate, potassium nitrate, lithium nitrate, rubidium nitrate, cesium nitrate, magnesium nitrate, calcium nitrate, strontium nitrate, barium nitrate or ammonium nitrate, a salt obtained by exchanging the carbonate ion or nitrate ion contained in the carbonate or nitrate with a halide ion, a sulfate ion, a carbonate ion, a hydrogen carbonate ion, an acetate ion, a phosphate ion or a hydrogen phosphate ion, or acid such as nitric acid or hydrochloric acid. The cation exchange temperature is not particularly limited as long as it is a common cation exchange temperature, and is usually room temperature to 100°C or less.

The separation method in separation of the zeolite after cation exchange is not particularly limited and may be a common method, the method here used can be, for example, filtration, decantation, a spray-drying method (rotary spraying, nozzle spraying, ultrasonic atomization, and the like), a drying method with a rotary evaporator, a vacuum-drying method, a freeze-drying method, or a natural drying method, and such separation can be usually made by filtration or decantation.

[Method for producing adsorbent molded article]

The method for producing the adsorbent molded article is not particularly limited, and may include a starting material mixing step (X) of mixing the zeolite and any other optional component (for example, binder) to prepare a starting material, a molding treatment step (Y) of subjecting the prepared starting material to molding treatment to obtain a precursor, and a calcining step (Z) of calcining the precursor to obtain a zeolite molded article.

Another method for producing the adsorbent molded article may be performed by molding according to a method such as extrusion treatment, injection treatment, injection-casting treatment, tumbling granulation treatment, compression molding treatment, or spray-drying treatment, or a combined method of two or more kinds of such methods as long as a desired adsorbent molded article is obtained.

(Starting material mixing step (X))

The starting material used in the starting material mixing step (X) may be used in a state depending on a production method, such as a powder, solvent dispersion, sol, or liquid state. For example, when the inorganic binder in the starting material used is used, a state depending on a production method, such as a powder, solvent dispersion, sol, or liquid state is used, and a powder or sol state is preferred from the viewpoint of handleability. These inorganic binders may be used singly or in combinations of a plurality thereof.

The temperature of mixing of the starting material is not particularly limited, and is, for example, preferably 10°C to 80°C, more preferably 15°C to 60°C.

The stirring unit adopted during preparation of the starting material can be any unit. For example, in a case where the state after starting material mixing is a slurry state as in spray-drying treatment, examples preferably include a stirring blade. Specific examples of the blade used in stirring include propeller-shaped, paddle-shaped, flat paddle-shaped, turbine-shaped, and cone-shaped blades. A baffle plate or the like may also be disposed in a tank in order to perform efficient stirring. The number of stirrers may be selected as an optimal condition depending on the size of a catalyst starting material liquid tank, the shape of the stirring blade, and/or the like.

For example, in a case where a clay state in a funicular to capillary state is achieved after starting material mixing as in extrusion treatment, a mixer, a kneader, or the like is preferably selected depending on the state of the starting material.

[Molding treatment step (Y)]

Examples of the molding treatment in the molding treatment step (Y) include extrusion treatment, compression molding treatment, and spray-drying treatment.

The extrusion treatment is not particularly limited, and the temperature during extrusion is, for example, preferably 10°C to 80°C, more preferably 15°C to 75°C depending on properties of the starting material used (also referred to as "starting material clay" in the extrusion treatment.).

The amount of moisture in the starting material clay is preferably 35% by mass to 50% by mass, more preferably 38% by mass to 45% by mass. In a case where the amount of moisture is 50% by mass or less, an excess enhancement in flexibility of the starting material clay can be prevented and moldability tends to be enhanced, and in a case where the amount of moisture is 35% by mass or more, an excess reduction in flexibility of the starting material clay can be prevented and moldability tends to be enhanced.

In a case where extrusion treatment is adopted in the molding treatment step (Y), an extruder is not particularly limited, and examples thereof include screw-type, roll-type, blade-type, self-molding-type, ram-type, and disc-pelleter-type extruders. Among these, in particular, extrusion treatment is preferably carried out by a roll-type, screw-type, or disc-pelleter-type extruder.

In a case where compression molding treatment is adopted in the molding treatment step (Y), a compression molding machine is not particularly limited, and examples include uniaxial molding and hot press molding.

In the spray-drying treatment, for example, slurry atomization can be performed by any method with a rotating disc system, a two-fluid nozzle system, a high-pressure nozzle system, or the like usually industrially carried out, and in particular, is preferably performed with a rotating disc system. The drying heat source used in drying of droplets sprayed is preferably air heated by steam, an electric heater, or the like.

The temperature of an inlet of a drier can be about 100°C to 400°C, and is preferably 150°C to 300°C. The temperature of an outlet of a drier can be about 40°C to 150°C, and is preferably 50°C to 130°C.

[Calcining step (Z)]

The calcining temperature in the calcining step (Z) is not particularly limited as long as it is a temperature generally adopted, and is preferably less than 550°C, more preferably 530°C or less, further preferably 500°C or less because the zeolite tends to be able to secure strength with crystallinity being retained. The calcining temperature is preferably 110°C or more, more preferably 120°C or more.

The calcining time in the calcining step (Z) is not particularly limited as long as it is a time during which a carrier is sufficiently dried and sintered, and can be appropriately selected depending on the calcining temperature, and is preferably 20 days or less, more preferably 10 days or less, further preferably 7 days or less because the zeolite tends to be able to secure strength with crystallinity being retained.

The calcining atmosphere in the calcining step (Z) is not particularly limited as long as it is an atmosphere generally adopted, and an air atmosphere, or an atmosphere to which an inert gas such as nitrogen or argon, or oxygen is added is usually adopted.

The calcining in the calcining step (Z) can be performed with a calcining furnace such as a rotary furnace, a tunnel furnace, or a muffle furnace.

<Gaseous substance A>

The gaseous substance A may be a gaseous substance different from carbon dioxide. The "gaseous substance" means a substance that is gaseous at an ordinary temperature of 25°C under ordinary pressure. Examples of the gaseous substance A include methane, ethane, nitrogen, carbon monoxide, hydrogen, argon, and dimethyl ether. Among such gaseous substances A, methane, ethane, and nitrogen are preferred, methane and ethane are more preferred, and methane is further preferred.

<Mixed gas>

The mixed gas used as a starting material includes carbon dioxide and the gaseous substance A.

The content of the carbon dioxide in the mixed gas may be 1% by volume to 99% by volume, 5% by volume to 90% by volume, 10% by volume to 80% by volume, 20% by volume to 70% by volume, or 30% by volume to 70% by volume.

The content of the gaseous substance A in the mixed gas may be 1% by volume to 99% by volume, 5% by volume to 90% by volume, 10% by volume to 80% by volume, 20% by volume to 70% by volume, or 30% by volume to 70% by volume.

The moisture content of the mixed gas is preferably 10% by volume or less, more preferably 1000 ppm by volume or less, further preferably 500 ppm by volume or less, still further preferably 100 ppm by volume or less. With the moisture content falling within the range, adsorption performance of the adsorbent can be highly exhibited. The moisture content of the mixed gas can be, for example, measured with a dew-point meter and converted into a moisture content with a method described in JIS Z8806: 2001.

[Gas separation apparatus]

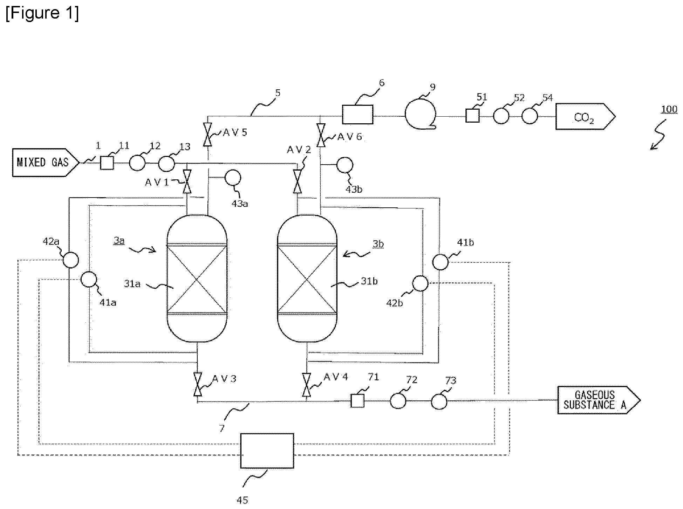

A schematic configuration of a gas separation apparatus 100 according to the first embodiment is described with reference to Figure 1. The gas separation apparatus 100 has a mixed gas supply line 1, a carbon dioxide adsorption column 3a and a carbon dioxide adsorption column 3b, pressure difference measurement sections 41a, 42a, 41b and 42b, a management section 45, a carbon dioxide recovery line 5, a gaseous substance A recovery line 7, and a pressure reducing apparatus 9.

<Carbon dioxide adsorption column>

The carbon dioxide adsorption column 3a is configured so as to enable the mixed gas to be introduced, thereby contacting the adsorbent molded article and the mixed gas. The adsorption step described below is to contact the mixed gas with the adsorbent, thereby adsorbing carbon dioxide in the mixed gas to the adsorbent. Carbon dioxide can be adsorbed in the mixed gas, to extract the gaseous substance A. After the adsorption step, the adsorption column can be placed under reduced pressure to extract carbon dioxide in the desorption step. Thus, a purified gas of the gaseous substance A and a purified gas of carbon dioxide are obtained in the adsorption step and the desorption step. Herein, the adsorption column may be provided with a heater for raising the temperature in the adsorption column.

As shown in Figure 1, the carbon dioxide adsorption column 3a has a fixed bed 31a that is configured to be capable of contacting with a mixed gas introduced therein and that is packed with an adsorbent molded article. The carbon dioxide adsorption column 3a is connected to the mixed gas supply line 1 at one end thereof and is connected to the gaseous substance A recovery line 7 at other end thereof. The gaseous substance A recovery line 7 is provided with an automatic valve AV3. The gaseous substance A recovery line 7 is also provided with a flow meter 71, a moisture meter 72 and a component analyzer 73. The component analyzer 73 here used may be an analyzer capable of measuring the concentration of carbon dioxide and the concentration of a gaseous substance A.

The carbon dioxide adsorption column 3a is connected to the carbon dioxide recovery line 5 at an end portion thereof in the same direction as the direction of an end portion thereof at which the column is connected to the mixed gas supply line 1. The mixed gas supply line 1 is provided with a flow meter 11, a moisture meter 12 and a component analyzer 13. The carbon dioxide adsorption column 3a is provided with an automatic valve AV1 at an inlet thereof. On the other hand, the pressure reducing apparatus 9 is connected to the carbon dioxide recovery line 5, and is configured to be capable of reducing the pressure in the carbon dioxide adsorption column 3a. The pressure reducing apparatus 9 may be here a vacuum pump. The carbon dioxide recovery line 5 connected to the carbon dioxide adsorption column 3a is provided with an automatic valve AV5 and a manometer 53a. Furthermore, the carbon dioxide recovery line 5 is provided with a flow meter 51, a moisture meter 52 and a component analyzer 54. The component analyzer 54 here used may be an analyzer capable of measuring the concentration of carbon dioxide and the concentration of a gaseous substance A.

The carbon dioxide adsorption column 3b has a fixed bed 31b that is configured to be capable of contacting with a mixed gas introduced therein and that includes an adsorbent molded article. The carbon dioxide adsorption column 3b is provided with an automatic valve AV2 at an inlet thereof. The carbon dioxide adsorption column 3b is connected to the mixed gas supply line 1 at one end thereof and is connected to the gaseous substance A recovery line 7 at other end thereof. The gaseous substance A recovery line 7 is provided with an automatic valve AV4. The carbon dioxide adsorption column 3b is also connected to the carbon dioxide recovery line 5 at an end portion thereof in the same direction as the direction of an end portion thereof at which the column is connected to the mixed gas supply line 1. The carbon dioxide recovery line 5 connected to the carbon dioxide adsorption column 3b is provided with an automatic valve AV6 and a manometer 53b.

The pressure difference measurement section 41a may be connected to the mixed gas supply line 1 and the gaseous substance A recovery line 7, and is disposed so as to be capable of measuring the pressure loss $\Delta Pf$ from the pressure difference between the pressure $P_1$ of the carbon dioxide adsorption column 3a on the side of the mixed gas supply line 1 and the pressure $P_2$ of the carbon dioxide adsorption column 3a on the opposite side of the mixed gas supply line.

The pressure difference measurement section 42a may be connected to the gaseous substance A recovery line 7 and the carbon dioxide recovery line 5, and is disposed so as to be capable of measuring the pressure loss $\Delta Pr$ from the pressure difference between the pressure $P_3$ of the adsorption column on the side of the carbon dioxide recovery line and the pressure $P_4$ of the adsorption column on the opposite side of the carbon dioxide recovery line.

The pressure difference measurement sections 41b and 42b are also disposed in the same manner as in the pressure difference measurement sections 41a and 41b.

A differential manometer can be used as each of the pressure difference measurement sections 41a, 42a, 41b and 42b. The differential manometer is not particularly limited, and examples thereof include a U-shaped tube manometer and a digital differential manometer.

Although not shown, a pressure difference measurement section may also be configured with a first manometer that measures the pressure $P_1$ of the carbon dioxide adsorption column 3a on the side of the mixed gas supply line 1 and a second manometer that measures the pressure $P_2$ of the carbon dioxide adsorption column 3a on the opposite side of the mixed gas supply line 1, instead of the pressure difference measurement section 41a. The same also applies to the pressure difference measurement sections 42a, 41b and 42b. Examples of the manometers used as the first manometer and the second manometer include a liquid type manometer, a deadweight type manometer, a Bourdon tube manometer, a bellows type manometer, a chamber type manometer, and a diaphragm type manometer.

The management section 45 is electrically connected to the pressure difference measurement sections 41a, 42a, 41b and 42b as shown in a dashed line in Figure 1.

<Powder removal section>

The carbon dioxide recovery line 5 has the powder removal section 6 between the carbon dioxide adsorption column 3a and the pressure reducing apparatus 9. The adsorbent molded article packed in the carbon dioxide adsorption column 3a is embrittled due to adsorption of carbon dioxide, thereby generating a powder. The powder removal section 6 removes the powder generated in the carbon dioxide adsorption column 3a.

The powder removal apparatus used in the powder removal section 6 can be, for example, any system of a gravity system, an inertia system, a centrifugal system, a washing system, a filtration system, and an electric system. Among these powder removal apparatuses, the powder removal section 6 is preferably a filtration system powder removal apparatus.

The filtration system powder removal apparatus may be any system of a strainer system, a filter system, and the like, and is preferably a strainer system.

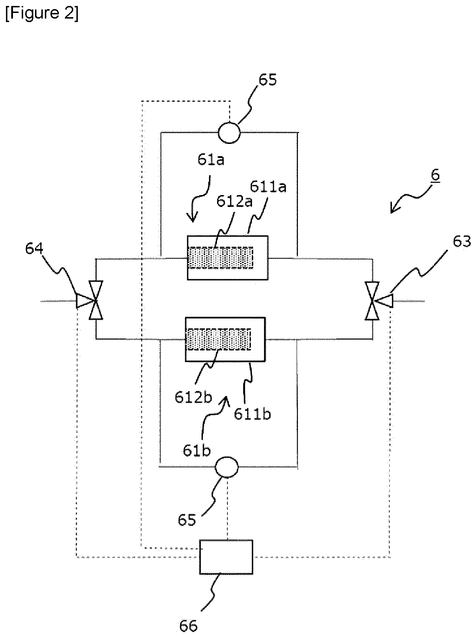

Figure 2 illustrates a diagram showing a schematic configuration of the powder removal section 6. The powder removal section 6 has a strainer 61a and a strainer 62b. The strainer 61a has a strainer housing 611a and a filter 612a. The strainer 61b also similarly has a strainer housing 611b and a filter 612b. Switching valves 63 and 64 control the flow of a gas introduced from the carbon dioxide adsorption column 3a or 3b, and a powder is removed by any one or both the strainer 61a and strainer 62b. For example, a configuration in which the switching valves 62 and 63 are operated to allow only the strainer 61a to be activated, thereby cleaning the filter of the strainer 61b, may also be here adopted so that maintenance can be made.

A differential manometer 65 that measures the pressure difference between upstream and downstream pressures may be disposed on each of the strainer 61a and the strainer 62b, to measure the pressure loss on each of the strainer 61a and the strainer 62b. A management section 66 may also be included which is electronically connected to the differential manometer 65 and which can acquire differential pressure information from the differential manometer. The management section 66 displays maintenance information of the powder removal section 6, for example, the strainer 61a and the strainer 62b, on a display section not shown, based on the result of the pressure loss. In a case where two strainers are included as in the powder removal section 6 shown in Figure 2, these strainers can be switched by operations of the switching valves 62 and 63, or a configuration may be adopted in which, in a case where the value of the pressure loss measured on each of the strainers is measured with the management section 66 and thus exceeds a predetermined value, operations of the switching valves 62 and 63 are automatically performed, and the strainer 61a and the strainer 62b may also be thus automatically switched and run.

The carbon dioxide adsorption column 3b has a fixed bed 31b that is configured to be capable of contacting with a mixed gas introduced therein and that is packed with an adsorbent molded article. The carbon dioxide adsorption column 3b is provided with an automatic valve AV2 at an inlet thereof. The carbon dioxide adsorption column 3b is connected to the mixed gas supply line 1 at one end thereof and is connected to the gaseous substance A recovery line 7 at other end thereof. The gaseous substance A recovery line 7 is provided with an automatic valve AV4. The carbon dioxide adsorption column 3b is also connected to the carbon dioxide recovery line 5 at an end portion thereof in the same direction as the direction of an end portion thereof at which the column is connected to the mixed gas supply line 1. The carbon dioxide recovery line 5 connected to the carbon dioxide adsorption column 3b is provided with an automatic valve AV6 and a manometer 53b.

Next, the action of the gas separation apparatus 100 according to the present embodiment is described with reference to Figure 1. A gas separation method is carried out which is a gas separation method for separating carbon dioxide and a gaseous substance A different from carbon oxide, from a mixed gas containing the carbon dioxide and the gaseous substance A using an adsorption column packed with an adsorbent, by the gas separation apparatus 100 according to the present embodiment includes an adsorption step of introducing the mixed gas into the adsorption column to allow carbon dioxide to be adsorbed onto the adsorbent and to extract a gaseous substance A, and a desorption step of exhausting carbon dioxide under reduced pressure from the adsorption column, to extract the carbon dioxide from the adsorbent. The above gas separation method enables carbon dioxide and a gaseous substance A to be efficiently separated with small power. The gas separation method according to the present embodiment provides carbon dioxide and a gaseous substance A as purified gases. In the gas separation method according to the present embodiment, the adsorption step and the desorption step may be repeatedly performed depending on the amount of the mixed gas to be treated and the intended purity of each of the purified gases, and these steps are repeatedly performed to provide high-purity purified gases.

The rate of recovery of the gaseous substance A extracted in the adsorption step once is preferably 90% or more, and thus a high-purity gaseous substance A can be obtained with a small number of times. The purity of the carbon dioxide extracted in the desorption step once is 90% or more, and thus high-purity carbon dioxide can be obtained with a small number of times. The above configuration can allow for efficient purification with small power, and thus can allow for simultaneous production of high-purity carbon dioxide and a high-purity gaseous substance A. The rate of recovery of the gaseous substance A extracted in the adsorption step once here means the rate of recovery in any second or later pressure variation cycle. While the adsorbent in the first pressure variation cycle (at start-up) is in a state where almost no carbon dioxide is adsorbed, the adsorption step is initiated in any second or later pressure variation cycle, in a state where a given amount of carbon dioxide in the previous cycle is adsorbed. Therefore, the rate of recovery in such any second or later cycle is defined as the rate of recovery of the gaseous substance A extracted in the adsorption step once. The phrases "adsorption step once" and "desorption step once" mean respective single pressure variation cycles of carbon dioxide adsorption columns in the adsorption step and the desorption step.

The mixed gas is supplied to the carbon dioxide adsorption column 3a via the mixed gas supply line 1. Then, carbon dioxide ($CO_2$) contained in the mixed gas is adsorbed by the adsorbent packed in the carbon dioxide adsorption column 3a, and a gaseous substance A such as methane ($CH_4$) is recovered from the gaseous substance A recovery line 7. In other words, the adsorption step of introducing the mixed gas into the carbon dioxide adsorption column 3a and adsorbing carbon dioxide to the adsorbent to extract the gaseous substance A is performed in the adsorption column.

The adsorption pressure $P_a$ in the adsorption step is preferably 50 to 3000 kPa, more preferably 60 to 500 kPa, further preferably 70 to 350 kPa. The adsorption pressure $P_a$ means the pressure around an adsorption column inlet through which the mixed gas is introduced.

The average temperature in the adsorption step is preferably 0°C or more, preferably 10°C to 400°C, further preferably 25°C to 300°C, still further preferably 25°C to 200°C from the viewpoint of an increase in efficiency of desorption of carbon dioxide in the desorption step to be subsequently performed and saving of the power per mixed gas to be treated.

The average temperature in the adsorption step means the average temperature of gas around an adsorption column outlet in the adsorption step. The temperature may be gradually changed in the adsorption step due to the presence of exotherm by adsorption of carbon dioxide to the adsorbent.

The carbon dioxide adsorption column 3a incorporating the adsorbent in which carbon dioxide is adsorbed is subjected to exhaust of carbon dioxide under reduced pressure by the pressure reducing apparatus 9, and thus not only the adsorbent in the carbon dioxide adsorption column 3a is recycled, but also carbon dioxide purified is extracted. In other words, a carbon dioxide desorption step of exhausting carbon dioxide from the adsorption column under reduced pressure to extract the carbon dioxide is performed.

The ultimate pressure $P_b$ in the desorption step is preferably 50 kPa or less, more preferably 30 kPa or less, further preferably 20 kPa or less, further preferably 15 kPa or less, further preferably 10 kPa or less, further preferably 5 kPa or less, further preferably 3 kPa or less. The ultimate pressure $P_b$ means the pressure around an exhaust outlet of the adsorption column packed with the adsorbent, at which the adsorption column is subjected to exhaust under reduced pressure, and also means the pressure that is finally fixed by gradual pressure drop of the adsorption column due to the exhaust under reduced pressure.

The average temperature in the desorption step is preferably 0°C or more, preferably 10°C to 400°C, further preferably 25°C to 300°C, still further preferably 25°C to 200°C from the viewpoint of an increase in efficiency of desorption of carbon dioxide and saving of the power per mixed gas to be treated. The average temperature in the desorption step means the average temperature of desorbed gas (carbon dioxide) around an adsorption column outlet in the desorption step. The temperature may be gradually changed in the desorption step due to the presence of endotherm by desorption of carbon dioxide from the adsorbent.

The purity of the carbon dioxide extracted in the desorption step once, in the gas separation method according to the present embodiment, is preferably 90% by volume or more, more preferably 92% by volume or more, further preferably 94% by volume or more. Herein, carbon dioxide undergoing the desorption step may further undergo the adsorption step and the desorption step and then be further increased in purity.

Carbon dioxide adsorption by introduction of the mixed gas and carbon dioxide desorption by a reduction in pressure are repeatedly performed in the carbon dioxide adsorption column 3a and the carbon dioxide adsorption column 3b, as described above. Here, while carbon dioxide is desorbed in the carbon dioxide adsorption column 3a, the mixed gas is introduced into the carbon dioxide adsorption column 3b and carbon dioxide is adsorbed. After the completion of desorption of carbon dioxide in the carbon dioxide adsorption column 3a, the mixed gas is again introduced into the carbon dioxide adsorption column 3a, and carbon dioxide is desorbed in the carbon dioxide adsorption column 3b that is under reduced pressure, to repeat adsorption/desorption of carbon dioxide in each of the columns, thereby allowing for continuous treatment of the mixed gas.

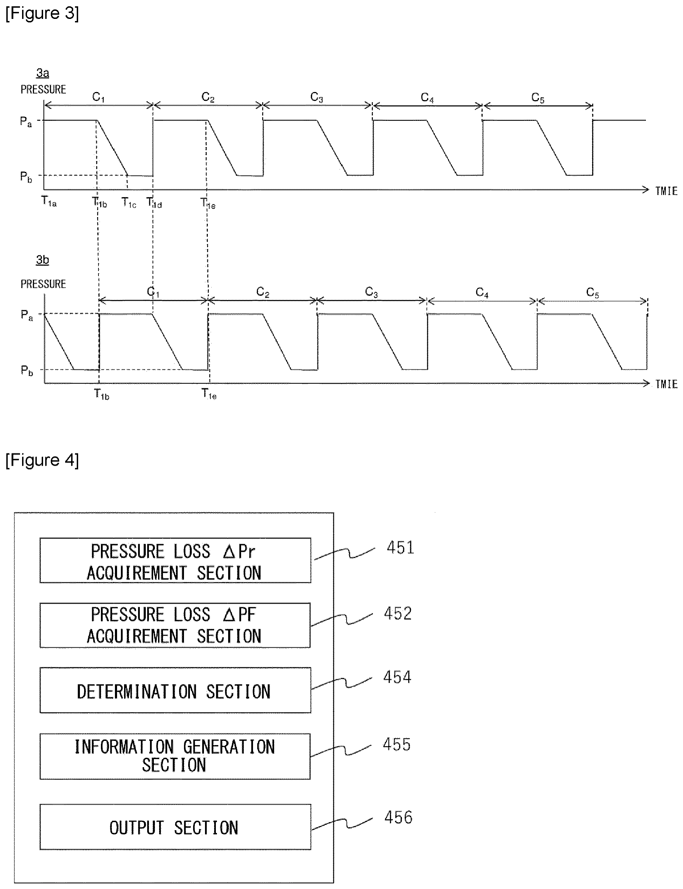

More specifically, the action can be made according to the following procedure. Figure 3 illustrates a conceptual diagram showing the respective changes of pressure variations over time, of the carbon dioxide adsorption column 3a and the carbon dioxide adsorption column 3b by the action of the gas separation apparatus 100. The automatic valves AV1 and AV3, among the automatic valves AV1 to AV6 that are all in a closed state, are opened at a time $T_{1a}$ in Figure 3, to supply the mixed gas to the carbon dioxide adsorption column 3a at an adsorption pressure $P_a$ (for example, 105 kPa) with checking by the flow meter 11 so that a predetermined flow rate is achieved in the mixed gas supply line 1. When the carbon dioxide concentration exceeds 5% by volume in the component analyzer 73 (for example, a time $T_{1b}$ in Figure 3), the automatic valve AV1 and the automatic valve AV3 may be closed and at the same time the automatic valve AV2 and the automatic valve AV4 may be opened to switch supply of the mixed gas to the carbon dioxide adsorption column 3a to such supply to the carbon dioxide adsorption column 3b. Such switching allows for supply of the mixed gas to the carbon dioxide adsorption column 3b at an adsorption pressure $P_a$ (for example, 105 kPa). The carbon dioxide adsorption column 3a is reduced in pressure by the pressure reducing apparatus 9 with opening of the automatic valve AV5 in a closed state of the automatic valve AV3, resulting in a reduction in pressure in the carbon dioxide adsorption column 3a, and the pressure in the carbon dioxide adsorption column is an ultimate pressure $P_b$ (for example, 2 kPa) to perform the desorption operation, resulting in recovery of carbon dioxide from the carbon dioxide adsorption column 3a. The arrival time at which the ultimate pressure $P_b$ is achieved is defined as $T_{1c}$. Carbon dioxide adsorbed by the adsorbent in the carbon dioxide adsorption column 3a is desorbed and thus not only carbon dioxide is recovered, but also the adsorbent is recycled.

Subsequently, when the carbon dioxide concentration in the gas flowing out from the carbon dioxide adsorption column 3b exceeds 5% by volume, the automatic valve AV2 and the automatic valve AV4 may be closed and at the same time the automatic valve AV1 and the automatic valve AV3 may be opened to switch supply of the mixed gas to the carbon dioxide adsorption column 3b to such supply to the column 3a (the time is defined as $T_{1d}$). The carbon dioxide adsorption column 3b is reduced in pressure by the pressure reducing apparatus 9 with opening of the automatic valve AV6, and thus the pressure in the carbon dioxide adsorption column 3b is 2 kPa to perform the desorption operation, resulting in recovery of carbon dioxide from the carbon dioxide adsorption column 3b. Thereafter, when the carbon dioxide concentration exceeds 5% by volume in the component analyzer 73 (for example, a time $T_{1e}$ in Figure 3), the automatic valve AV1 and the automatic valve AV3 may be closed and at the same time the automatic valve AV2 and the automatic valve AV4 may be opened to again switch supply of the mixed gas to the carbon dioxide adsorption column 3a to such supply to the carbon dioxide adsorption column 3b.

A series of actions from the times $T_{1a}$ to $T_{1d}$ as shown above corresponds to the action of one cycle $C_1$ of the pressure variation in the carbon dioxide adsorption column 3a. A series of actions from the times $T_{1b}$ to $T_{1e}$ corresponds to the action of one cycle $C_1$ of the pressure variation in the carbon dioxide adsorption column 3b. In other words, the cycle $C_1$ includes the adsorption step once and the desorption step once. The same action may be repeated to repeatedly perform the second cycle $C_2$ and the third cycle $C_3$ of the pressure variation, and the adsorption step and the desorption step.

The purity of the gaseous substance A extracted in the adsorption step once, in the gas separation method according to the present embodiment, is preferably 90% by volume or more, more preferably 93% by volume or more, further preferably 95% by volume or more. Herein, carbon dioxide undergoing the desorption step may further undergo the adsorption step and the desorption step and then be further increased in purity.

The rate of recovery of the carbon dioxide extracted in the adsorption step and the desorption step once, in the gas separation method according to the present embodiment, is preferably 90% or more, more preferably 93% or more, further preferably 95% or more based on the total amount of the carbon dioxide in the mixed gas introduced into the adsorption column in the adsorption step once. The rate of recovery of the carbon dioxide extracted in the adsorption step and the desorption step once here means the rate of recovery in any second or later pressure variation cycle. While the adsorbent in the first pressure variation cycle (at start-up) is in a state where almost no carbon dioxide is adsorbed, the adsorption step is initiated in any second or later pressure variation cycle, in a state where a given amount of carbon dioxide in the previous cycle is adsorbed. Therefore, the rate of recovery in such any second or later cycle is defined as the rate of recovery of the carbon dioxide extracted in the adsorption step and the desorption step once.

The gas separation method according to the present embodiment preferably includes an activation step of raising the temperature and reducing the pressure in the adsorption column to desorb moisture from the adsorbent. The activation step can activate the adsorbent to adsorb moisture in a gas to be treated, decreasing moisture in carbon dioxide and a gaseous substance A obtained. The activation step is preferably performed before the adsorption step and the desorption step. The activation step may also be performed when the adsorption step and the desorption step are repeated and a large amount of moisture is adsorbed by the adsorbent.

The ultimate pressure $P_e$ in the activation step is preferably 50 kPa or less, more preferably 30 kPa or less, further preferably 20 kPa or less, further preferably 15 kPa or less, further preferably 10 kPa or less, further preferably 5 kPa or less, further preferably 3 kPa or less. The ultimate pressure $P_e$ means the pressure around an exhaust outlet of the adsorption column packed with the adsorbent, at which the adsorption column is subjected to exhaust under reduced pressure, and also means the pressure that is finally fixed by gradual pressure drop of the adsorption column due to the exhaust under reduced pressure.

The temperature in the adsorption column in the activation step is preferably 150°C or more, more preferably 180°C to 300°C, further preferably 200°C to 280°C.

The gas separation apparatus 100 may be applied to, for example, purification of an industrial exhaust gas containing carbon dioxide, biogas obtained by fermentation of organic substances, or the like. In particular, the apparatus is particularly suitably used in purification of biogas.

The total rate of recovery of carbon dioxide from the mixed gas in the gas separation method according to the present embodiment is preferably 90% or more, more preferably 93% or more, further preferably 95% or more. The total rate of recovery here means the total amount of the carbon dioxide recovered, based on the total amount of the carbon dioxide in the mixed gas introduced into the adsorption column.

The rate of recovery of the gaseous substance A extracted in the adsorption step and the desorption step once, in the gas separation method according to the present embodiment, is preferably 90% or more, more preferably 93% or more, further preferably 95% or more based on the total amount of the gaseous substance A in the mixed gas introduced into the adsorption column in the adsorption step once.

The total rate of recovery of the gaseous substance A from the mixed gas in the gas separation method according to the present embodiment is 90% or more, more preferably 93% or more, further preferably 95% or more.

The total rate of recovery here means the total amount of the gaseous substance A recovered, based on the total amount of the gaseous substance A in the mixed gas introduced into the adsorption column.

In the gas separation method according to the present embodiment, preferably, the total rate of recovery of carbon dioxide from the mixed gas is 90% by volume or more and the total rate of recovery of the gaseous substance A from the mixed gas is 90% or more, more preferably, the total rate of recovery of carbon dioxide from the mixed gas is 93% or more and the total rate of recovery of the gaseous substance A from the mixed gas is 93% or more, and further preferably, the total rate of recovery of carbon dioxide from the mixed gas is 95% or more and the total rate of recovery of the gaseous substance A from the mixed gas is 95% or more.

The purity of the gaseous substance A obtained in the gas separation method according to the present embodiment is preferably 90% by volume or more, more preferably 93% by volume or more, further preferably 95% by volume or more.

The purity of the carbon dioxide obtained in the gas separation method according to the present embodiment is preferably 90% by volume or more, more preferably 92% by volume or more, further preferably 95% by volume or more.

The moisture content in the carbon dioxide obtained in the gas separation method according to the present embodiment is preferably 500 ppm by volume or less, more preferably 300 ppm by volume or less, further preferably 100 ppm by volume or less. The moisture content of the carbon dioxide can be measured with, for example, a dew-point meter. The moisture content of the carbon dioxide can be lower than the above value by adopting a zeolite as the adsorbent in the gas separation method.

The method for producing a purified gas according to the present embodiment provides a purified gaseous substance A or purified carbon dioxide by the gas separation method according to the present embodiment.

[Management method]

The method for managing a gas separation apparatus includes acquiring the pressure loss $\Delta P$ of each of the carbon dioxide adsorption column 3a and 3b and then managing the adsorbent by the management section 45.

As shown in Figure 4, the management section 45 has a pressure loss $\Delta Pr$ acquirement section 451, a pressure loss $\Delta Pf$ acquirement section 452, a determination section 454, an information generation section 455, and an output section 456. The management section 45 is configured to be capable of acquiring the pressure loss $\Delta P$ from each of the pressure difference measurement sections 41a, 42a, 41b and 42b.

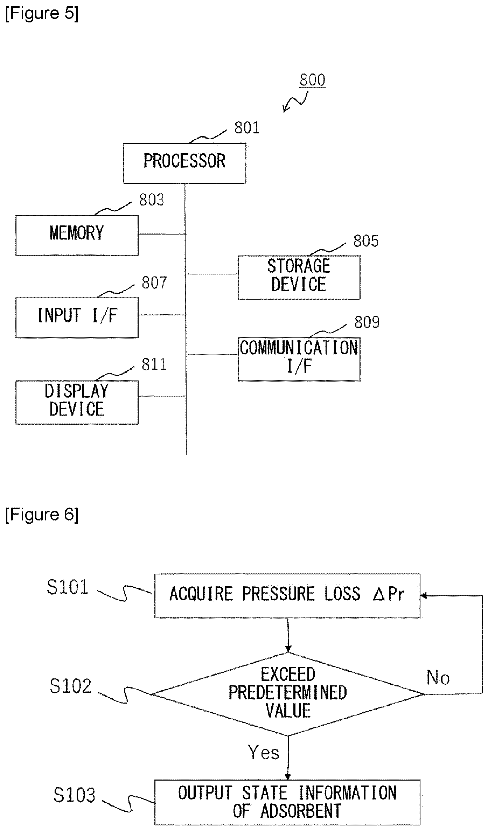

The function of the management section can also be realized by a plurality of computers 800. As shown in Figure 5, the computer 800 includes a processor 801, a memory 803, a storage device 805, an input I/F807, a communication I/F809, and a display device 811. The computer 800 does not optionally include some of the above constituents, or may include any other constituent in addition to the above constituents.

The processor 801 is a control section in which a program stored in the memory 803 is executed to execute various kinds of processing in the computer 800, thereby controlling each of the constituents in the computer 800.

The memory 803 is, for example, a storage medium such as RAM (Random Access Memory). The memory 803 temporarily stores a program code such as a program to be executed by the processor 801, and data necessary during execution of the program.

The storage device 805 is a non-volatile storage medium, for example, a hard disc drive (HDD) or a flash memory. The storage device 805 stores various programs for realizing an operating system and each of the above constituents.

The input I/F807 is a device for receiving the input from a user. Specific examples of the input I/F807 include a keyboard, a mouse, a touch panel, various sensors, and a wearable-device. The input I/F807 may be connected to the computer 800 via, for example, an interface such as USB (Universal Serial Bus).

The communication I/F809 is a device for performing wired or wireless data communication with an external apparatus of the computer 800 via the Internet N. The communication I/F809 is realized by, for example, NIC (Network Interface Card).

The display device 811 is a device for displaying various kinds of information. Specific examples of the display device 811 include displays such as a liquid crystal display and an organic EL (Electro-Luminescence) display, and a wearable-device. The display device 811 may be installed outside the computer 800. In this case, the display device 811 is connected to the computer 800 via, for example, a display cable. In a case where a touch panel is adopted as the input I/F807, the display device 811 can be configured so as to be integrated with the input I/F807.

Hereinafter, an example of management of the carbon dioxide adsorption column 3a is taken and described, but the carbon dioxide adsorption column 3b may also be managed by the same method.

As shown in Figure 6, in a case where the pressure in the carbon dioxide adsorption column 3a is reduced and carbon dioxide is recovered, the method for managing a gas separation apparatus has a pressure loss $\Delta Pr$ acquirement step S101, a determination step S102 of determining whether the pressure loss $\Delta Pr$ exceeds a predetermined value, and an output step S103 of outputting state information of the adsorbent in a case where the pressure loss $\Delta Pr$ exceeds a predetermined value.

In the pressure loss $\Delta Pr$ acquirement step S101, when the pressure of the carbon dioxide adsorption column 3a is reduced and carbon dioxide is recovered, the pressure loss $\Delta Pr$ acquirement section 451 acquires the pressure difference due to the carbon dioxide adsorption column 3a from the pressure difference measurement section 42a and thus acquires the pressure loss $\Delta Pr$.

In the determination step S102, the determination section 454 determines whether the pressure loss $\Delta Pr$ exceeds a predetermined value. The predetermined value of the pressure loss $\Delta Pr$ can be set to, for example, a value indicating the time for replacement of the adsorbent. The adsorbent is embrittled due to adsorption of carbon dioxide, thereby generating a powder. The powder flows into, for example, the pressure reducing apparatus 9, thereby, for example, complicating operation and maintenance of the apparatus. On the other hand, it has been revealed that adsorption treatment of carbon dioxide is continuously and repeatedly performed by a carbon dioxide adsorption column to result in generation of a powder and an increase in pressure loss in the carbon dioxide adsorption column. In other words, the pressure loss of the carbon dioxide adsorption column can be measured to confirm the state of embrittlement of an adsorbent, and therefore, in a case where the pressure loss $\Delta Pr$ exceeds a predetermined value before complicated operation and maintenance, for example, cleaning of a pressure reducing apparatus is required due to powder generation from such an adsorbent, management of such an adsorbent, for example, management of the time for replacement of such an adsorbent can be made.

The predetermined value of the pressure loss $\Delta Pr$ can be set depending on a target value in gas separation. The target value can be set from the viewpoint of the purity and the rate of recovery of the gaseous substance A, from the viewpoint of the purity and the rate of recovery of carbon dioxide, from the viewpoint of the required electric power of a starting material supply apparatus, the pressure reducing apparatus, and the like, or from the viewpoint of protection of the pressure reducing apparatus.

For example, in a case where the predetermined value is set with the purity of the gaseous substance A as a target value, the predetermined value $\Delta Prs$ of the pressure loss $\Delta Pr$ can be represented by $(Pa + \Delta Pf) \times (1 - X) - Pd + Z$ (expression A) with X as the required purity of the gaseous substance A represented by a volume fraction, the pressure Pa (absolute pressure) during adsorption (during supply of the mixed gas), the pressure Pd (absolute pressure) during desorption (reduced pressure), and the coefficient Z arbitrarily set. In other words, it is meant that the pressure loss $\Delta Pr$ in a pressure reducing step is controlled not so as to exceed the predetermined value $\Delta Prs$, and therefore the partial pressure of the carbon dioxide in the gaseous substance A can be kept not so as to exceed the predetermined value $\Delta Prs$ and the purity of the gaseous substance A can be kept so as to be X or more. Z can be arbitrarily set ,for example, by the supposed time for replacement of the adsorbent, and is set by supposing the period to be taken for replacement preparation with the data of the change in $\Delta Pr$ over time during gas separation.

For example, in a case where the predetermined value is set with the rate of recovery of the gaseous substance A as a target value, an increase in pressure loss leads to a reduction in rate of recovery and therefore the pressure loss $\Delta Pf$ during mixed gas introduction, the pressure loss $\Delta Pr$ during pressure reduction, and the gaseous substance A can be measured over time to provide the pressure loss $\Delta Pf$ and the pressure loss $\Delta Pr$ that are not below any target values, as the set values. Similarly, the required electric power of the starting material supply apparatus or the pressure reducing apparatus increases according to an increase in pressure loss, and therefore correlations with the pressure loss $\Delta Pf$ and the pressure loss $\Delta Pr$ that are not below any target values can be determined to provide the set values.

The predetermined value of the pressure loss $\Delta Pr$ may be, for example, 10 kPa or less, 5 kPa or less, or 2 kPa or less.

The determination step S102 progresses to the next output step S103 in a case where the pressure loss $\Delta Pr$ exceeds the predetermined value. On the other hand, the determination step S102 returns back to the pressure loss $\Delta Pr$ acquirement step S101 in a case where the pressure loss $\Delta Pr$ is the predetermined value or less.

The output step S103 outputs state information of the adsorbent in a case where the pressure loss $\Delta Pr$ exceeds the predetermined value in the determination section 454. Examples of the state information include information that replacement of the adsorbent is required. The output of the state information, for example, may be displayed on the display device 811 or may be sent to an external apparatus from the communication I/F809.

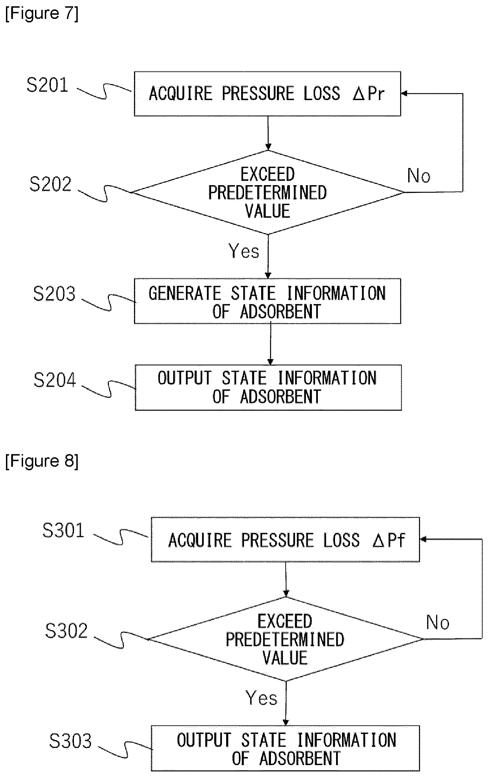

As shown in Figure 7, in a case where the pressure in the carbon dioxide adsorption column 3a is reduced and carbon dioxide is recovered, the method for managing a gas separation apparatus has a pressure loss $\Delta Pr$ acquirement step S201, a determination step S202 of determining whether the pressure loss $\Delta Pr$ exceeds a predetermined value, a generation step S203 of generating state information of the adsorbent in a case where the pressure loss $\Delta Pr$ exceeds a predetermined value, and an output step S204 of outputting the state information of the adsorbent. The pressure loss $\Delta Pr$ acquirement step S201 is the same as the pressure loss $\Delta Pr$ acquirement step S101, and thus the description thereof is omitted.

In the determination step S202, the determination section 454 determines whether the pressure loss $\Delta Pr$ exceeds a predetermined value. The predetermined value is as described above.

The generation step S203 generates state information depending on the value of the pressure loss $\Delta Pr$. Examples of the information generated include information that the time for replacement is coming and information that replacement of the adsorbent is required. The above information may also be displayed depending on the value of the pressure loss $\Delta Pr$.

The output step S203 outputs state information of the adsorbent based on the information generated in the information generation section 455. Examples of the state information include information that replacement of the adsorbent is required. The output of the state information, for example, may be displayed on the display device 811 or may be sent to an external apparatus from the communication I/F809.

As shown in Figure 8, in a case where the mixed gas is supplied to the carbon dioxide adsorption column 3a, the method for managing a gas separation apparatus has a pressure loss $\Delta Pf$ acquirement step S301, a determination step S302 of determining whether the pressure loss $\Delta Pf$ exceeds a predetermined value, and an output step S303 of outputting state information of the adsorbent in a case in which the pressure loss $\Delta Pf$ exceeds a predetermined value.

In the pressure loss $\Delta Pf$ acquirement step S301, when the mixed gas is supplied to the carbon dioxide adsorption column 3a and carbon dioxide is adsorbed, the pressure loss $\Delta Pf$ acquirement section 452 acquires the pressure difference due to the carbon dioxide adsorption column 3a from the pressure difference measurement section 41a and thus acquires the pressure loss $\Delta Pf$.

In the determination step S302, the determination section 452 determines whether the pressure loss $\Delta Pf$ exceeds a predetermined value. The predetermined value of the pressure loss $\Delta Pf$ can be set to, for example, a value indicating the time for replacement of the adsorbent. While it has been revealed as described above that adsorption treatment of carbon dioxide is continuously and repeatedly performed by an adsorbent (in particular, adsorbent including zeolite) to result in an increase in pressure loss in a carbon dioxide adsorption column, adsorbent information can be similarly managed also by the value of the pressure loss $\Delta Pf$ during mixed gas supply.

The predetermined value of the pressure loss $\Delta Pf$ may be, for example, 50 kPa or less, 30 kPa or less, or 10 kPa or less.

The determination step S302 progresses to the next output step S303 in a case where the pressure loss $\Delta Pf$ exceeds the predetermined value. On the other hand, the determination step S302 returns back to the pressure loss $\Delta Pf$ acquirement step S301 in a case where the pressure loss $\Delta Pf$ is the predetermined value or less.

The output step S303 outputs state information of the adsorbent in a case where the pressure loss $\Delta Pf$ exceeds the predetermined value in the determination section 454. Examples of the state information include information that replacement of the adsorbent is required. The output of the state information, for example, may be displayed on the display device 811 or may be sent to an external apparatus from the communication I/F809.

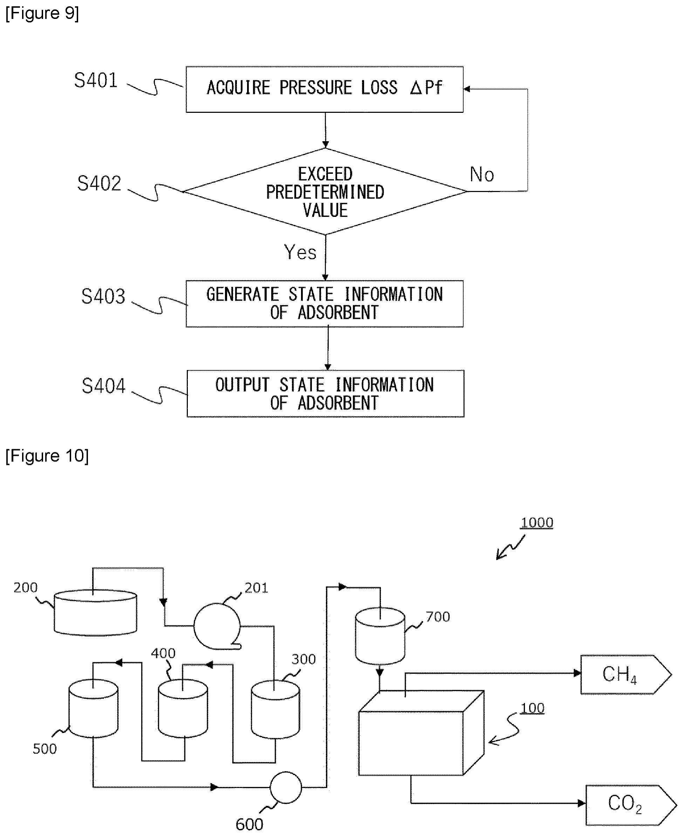

As shown in Figure 9, in a case where the pressure in the carbon dioxide adsorption column 3a is reduced and carbon dioxide is recovered, the method for managing a gas separation apparatus has a pressure loss $\Delta Pf$ acquirement step S401, a determination step S402 of determining whether the pressure loss $\Delta Pf$ exceeds a predetermined value, a generation step S403 of generating state information of the adsorbent in a case where the pressure loss $\Delta Pf$ exceeds a predetermined value, and an output step S404 of outputting the state information of the adsorbent. The pressure loss $\Delta Pf$ acquirement step S401 is the same as the pressure loss $\Delta Pf$ acquirement step S301, and thus the description thereof is omitted.

In the determination step S402, the determination section 454 determines whether the pressure loss $\Delta Pf$ exceeds a predetermined value. The predetermined value is as described above.

The generation step S403 generates state information depending on the value of the pressure loss $\Delta Pf$. Examples of the information generated include information that the time for replacement is coming and information that replacement of the adsorbent is required. The above information may also be displayed depending on the value of the pressure loss $\Delta Pf$.

The output step S403 outputs state information of the adsorbent based on the information generated in the information generation section 455. Examples of the state information include information that replacement of the adsorbent is required. The output of the state information, for example, may be displayed on the display device 811 or may be sent to an external apparatus from the communication I/F809.

[Biogas purification system 1000; application example to biogas purification]

Figure 10 illustrates a diagram showing a schematic configuration of a biogas purification system 1000 in which the gas separation apparatus 100 is applied to biogas purification. As an application example to biogas purification, an example is shown in which methane and carbon dioxide in a main components of biogas are separated and recovered. In the case of biogas purification, the gaseous substance A is usually methane ($CH_4$). While an example of application of the gas separation apparatus 100 is shown in Figure 10, the above gas separation apparatus 110 or gas separation apparatus 120 may also be applied.

The biogas purification system 1000 of the present embodiment includes a fermenter 200, a desulfurization column 300, a siloxane removal apparatus 400, an oxygen removal apparatus 500, a cooling apparatus 600, a dehydration apparatus 700, and a gas separation apparatus 100.

The fermenter 200 is a tank that generates biogas (hereinafter, also referred to as "mixed gas") by fermenting sewage sludge generated from sewage treatment plants, food residues generated from food factories or restaurants, or urine and feces generated from cattle farmers or the like, in an anaerobic condition. The fermenter 200 is connected to a blower 201 in order to enable the biogas generated to be supplied to other apparatus.

The fermenter 200 may be connected to the desulfurization column 300 before introduction of the biogas to the gas separation apparatus 100. The desulfurization column 300 is an adsorption column for removal of hydrogen sulfide contained in the biogas. Examples of a desulfurization agent packed in the desulfurization column 300 include iron oxide. Iron oxide reacts with hydrogen sulfide contained in the biogas to generate iron sulfide.

The fermenter 200 may be connected to the siloxane removal apparatus 400 before introduction of the biogas to the gas separation apparatus 100. The siloxane removal apparatus 400 removes siloxane contained in the biogas. This siloxane is a silicon oxide-containing substance contained in sewage sludge.

The fermenter 200 may be connected to the oxygen removal apparatus 500 before introduction of the biogas to the gas separation apparatus 100. The oxygen removal apparatus 500 removes oxygen contained in the biogas. This oxygen can be removed to safely transport methane gas after purification.

The fermenter 200 may be connected to the cooling apparatus 600 before introduction of the biogas to the gas separation apparatus 100. The cooling apparatus 600 cools the biogas supplied, to remove moisture contained in the biogas. Thus, the dew point of the biogas is decreased. The cooling apparatus 600 here used can be, for example, a water-cooling type cooler, an air-cooling type cooler, or an electric cooler.

The fermenter 200 may be connected to the dehydration apparatus 700 before introduction of the biogas to the gas separation apparatus 100. The dehydration apparatus 700 further removes moisture from the biogas from which moisture is removed by the cooling apparatus 600. Thus, the dew point of the biogas can be further decreased. The dehydration apparatus 700 here used can be, for example, an apparatus packed with a dehydration agent.

Next, the action of the biogas purification system 1000 of the present embodiment is described with reference to Figure 10.

First, biogas is generated by fermenting sewage sludge generated from sewage treatment plants, food residues generated from food factories or restaurants, or urine and feces generated from cattle farmers or the like, in an anaerobic condition in the fermenter 200. The biogas at this stage contains hydrogen sulfide, moisture, and the like.

The biogas generated in the fermenter 200 is sent to the desulfurization column 300. The desulfurization column 300 removes hydrogen sulfide so that the concentration of hydrogen sulfide contained in the biogas is at a level of about several parts per million by volume.

Thereafter, the biogas from which hydrogen sulfide is removed is sent to the siloxane removal apparatus 400. The siloxane removal apparatus 400 removes siloxane so that the concentration of siloxane contained in the biogas is at a level of about several milligrams/$Nm^3$.

Thereafter, the biogas from which siloxane is removed is sent to the oxygen removal apparatus 500. The oxygen removal apparatus 500 removes oxygen so that the concentration of oxygen contained in the biogas is at a level of about several parts per million by volume.

Next, the biogas is sent to the cooling apparatus 600. The cooling apparatus 600 cools the biogas to remove moisture contained in the biogas, thereby decreasing the dew point of the biogas. Thereafter, the biogas is sent to the dehydration apparatus 700. The dehydration apparatus 700 further removes moisture in the biogas, and the amount of moisture is reduced to 1000 ppm by volume or less.

The biogas from which hydrogen sulfide, siloxane, and moisture are removed is sent to the gas separation apparatus 100. The action of the gas separation apparatus 100 is as shown with respect to that of the above gas separation apparatus.

According to the present embodiment, it is possible to provide a gas separation apparatus, a method for managing a gas separation apparatus, a gas separation method, and a method for producing a purified gas, in which an adsorbent can be managed.

Examples

Hereinafter, the present embodiment is more specifically described with reference to Examples and the like, but these Examples are illustrative and the present embodiment is not limited to the following Examples.

<Adsorption selectivity>

The adsorption selectivity was determined by the following procedure.

(1) An adsorbent was placed in an amount of 0.2 g, into a 12-mm cell (manufactured by Micromeritics Instrument Corporation).

(2) Such a sample placed in the cell of (1) above was disposed on a gas adsorption measurement apparatus "3-Flex" (trade name) manufactured by Micromeritics Instrument Corporation, and subjected to heating/vacuum degassing treatment at 250°C and 0.001 mmHg or less for 12 hours.

(3) The sample placed in the cell of (2) above was placed in constant-temperature circulation water at 25°C, and measurement with liquefied carbon dioxide (manufactured by Sumitomo Seika Chemicals Co., Ltd., purity: 99.9% by volume or more) was performed at an absolute pressure of 0.25 to 760 mmHg after the temperature of the sample reached 25 ± 0.2°C. The pressure was here measured over time during the measurement, and it was determined that a saturated amount of adsorption was achieved when the pressure variation reached 0.001% by volume/10 sec or less. The gaseous substance A was again subjected to measurement at an absolute pressure of 0.25 to 760 mmHg by use of a gas having a purity of 99.9% by volume or more. The adsorption selectivity was defined as q(CO2)/q(GMA) under the assumption that the respective amounts of equilibrium adsorption (cc/g) at 760 mmHg, of carbon dioxide and the gaseous substance A, obtained by adsorption isotherm measurement were $q(CO_2)$ and q(GMA).

<Moisture content of mixed gas>

The moisture content of the mixed gas was measured with a dew-point meter (DMP74B probe manufactured by VAISALA).

<Atomic concentrations of silicon, aluminum, phosphorus, and potassium, and contents of potassium and lithium in zeolite>

The concentration of alkali metal in the zeolite was determined by thermally dissolving the zeolite in an aqueous sodium hydroxide solution or aqua regia and appropriately diluting the resulting solution, and performing ICP-emission spectrochemical analysis (hereinafter, also referred to as "ICP-AES", apparatus name: SPS3520UV-DD, manufactured by Hitachi High-Tech Science Corporation). The content of potassium and lithium in the zeolite was calculated as the proportion (Z/T) of the total value (Z) of the molar numbers of potassium and lithium to the total value (T) of the molar numbers of alkali metals in a zeolite. The proportion (K/T) of the total value (K) of the molar number of potassium to the total value (T) of the molar number of each alkali metal in the zeolite was also calculated in the same manner.

<$^{29}$Si-MAS-NMR spectrum and measurement of SAR>

The SAR of a zeolite in a zeolite molded article can be measured by measurement of $^{29}$Si-MAS-NMR. First, water was put on the bottom of a desiccator, for humidity conditioning of a zeolite, and a zeolite placed in a sample tube was retained thereon for 48 hours. After humidity conditioning treatment, $^{29}$Si-MAS-NMR measurement was performed under the following conditions.

Apparatus: JEOL RESONANCE ECA700

Magnetic field intensity: 16.44 T ($^{1}$H resonant frequency 700 MHz)

Measurement nucleus: $^{29}$Si

Resonant frequency :139.08 MHz

NMR tube: 4 mm$\varphi$ (rotor made of zirconia)

Measurement method: DD/MAS (dipolar decoupling magic angle spinning)

Pulse width: 45°

Waiting time: 50 sec

Cumulated number: 800 (measurement time; about 22 hours)

MAS: 10,000 Hz

Chemical shift reference: silicone rubber (-22.34 ppm), external reference

A molded article including a GIS-type zeolite shows the following five peaks in a $^{29}$Si-MAS-NMR spectrum.

(1) Q4(0Al): peak assigned to Si not bound with any Al via oxygen

(2) Q4(1Al): peak assigned to Si bound with one Al atom via oxygen

(3) Q4(2Al): peak assigned to Si bound with two Al atoms via oxygen

(4) Q4(3Al): peak assigned to Si bound with three Al atoms via oxygen

(5) Q4(4Al): peak assigned to Si bound with four Al atoms via oxygen

The peak positions in a $^{29}$Si-MAS-NMR spectrum are generally present at - 112 ppm to -80 ppm, and can be assigned to Q4(0Al), Q4(1Al), Q4(2Al), Q4(3Al), and Q4(4Al) from the high magnetic field side. While the peak positions can be changed depending on cationic species present in a zeolite backbone, the peak positions are generally present in the following ranges.

(1) Q4(0Al): -105 ppm to -112 ppm

(2) Q4(1Al): -100 ppm to -105 ppm

(3) Q4(2Al): -95 ppm to -100 ppm

(4) Q4(3Al): -87 ppm to -95 ppm

(5) Q4(4Al): -80 ppm to -87 ppm

The area intensities of the peaks in a $^{29}$Si-MAS-NMR spectrum are obtained by analysis with Gauss and Lorenz functions by use of analysis program dmfit (#202000113 version), and optimization calculation of four parameters of the amplitude (the height of the maximum value in the spectrum), the position (each **position** in the spectrum, ppm), the width (the full width at half maximum in the spectrum, ppm), and the Gauss/Lorenz ratio (xG/(1 - x)L), according to the algorithm of the least squares method. When the areas of the respective peaks of Q4(0Al), Q4(1Al), Q4(2Al), Q4(3Al), and Q4(4Al), thus determined, are designated as A_Q4(0Al), A_Q4(1Al), A_Q4(2Al), A_Q4(3Al), and A_Q4(4Al), and the total value of A_Q4(0Al), A_Q4(1Al), A_Q4(2Al), A_Q4(3Al), and A_Q4(4Al) is designated as A_total, the SAR can be determined according to the following.

SAR = 100/[A_Q4(1Al)/4 + 2 × A_Q4(2Al)/4 + 3 × A_Q4(3Al)/4 + 4 × A_Q4(4Al)/4] × 2

<X-ray diffraction; crystal structure analysis>

X-ray diffraction was performed by the following procedure.

(1) A zeolite (dry product) obtained in each Production Example was adopted as a sample, and pulverized by an agate mortar. Furthermore, 10% by mass of crystalline silicon (manufactured by Rare Metallic Co., Ltd.) was added, and mixed in the agate mortar until a uniform system was obtained, to provide a sample for structure analysis.

(2) The sample of (1) above was uniformly fixed on a non-reflective sample plate for powders, and crystal structure analysis was performed by X-ray diffraction in the following conditions.

X-ray diffraction apparatus (XRD): powder X-ray diffraction apparatus "RINT2500 model" (trade name) manufactured by Rigaku Corporation

X-ray source: Cu bulb tube (40 kV, 200 mA)

Measurement temperature: 25°C

Measurement range: 5 to 60° (0.02°/step)

Measurement speed: 0.2°/min

Slit widths (scattering, diffusion, light-receiving): 1°, 1°, 0.15 mm

Production Example 1: method for producing GIS-type zeolite molded article

A mixed gel was prepared by mixing 61.93 g of water, 0.403 g of sodium hydroxide (NaOH, manufactured by FUJIFILM Wako Pure Chemical Corporation), 3.39 g of sodium nitrate (NaNO$_3$, manufactured by FUJIFILM Wako Pure Chemical Corporation), 1.64 g of sodium aluminate (NaAlO$_2$, manufactured by FUJIFILM Wako Pure Chemical Corporation) and 10.82 g of colloidal silica (Ludox AS-40, solid concentration 40% by mass, manufactured by W.R. Grace & Co.),

and stirring them for 30 minutes. The composition of the mixed gel was as follows: $\alpha$ = E/Al$_2$O$_3$ = 4.53, $\beta$ = SiO$_2$/Al$_2$O$_3$ = 8.17, $\gamma$ = Na$_2$O/Al$_2$O$_3$ = 3.99, $\delta$ = P$_2$O$_5$/Al$_2$O$_3$ = 0.00, $\varepsilon$ = H$_2$O/Al$_2$O$_3$ = 431.0, $\zeta$ = H$_2$O/OH$^-$ = 376.7, $\eta$ = R/Al$_2$O$_3$ = 0.00. The mixed gel was loaded to a 200-mL stainless microbomb (manufactured by HIRO Company) including an inner cylinder of fluororesin, and hydrothermal synthesis was performed by a stirring-type constant-temperature bath (manufactured by HIRO Company) rotatable in the vertical direction of the microbomb, at a stirring rate of 30 rpm and 135°C for 4 days. After a product was subjected to filtration and dried at 120°C, a powdery zeolite was obtained. One g of the zeolite obtained was placed in 500 mL of an aqueous 0.05 N potassium carbonate solution adjusted with potassium carbonate (K$_2$CO$_3$, manufactured by Nippon Soda Co., Ltd.), and stirred at room temperature and 500 rpm for 3 hours. A product was subjected to filtration and dried at 120°C, and a powdery zeolite was obtained in which a cation was partially exchanged with potassium. It was confirmed from an XRD spectrum that the zeolite obtained was a GIS-type zeolite. Furthermore, the zeolite was evaluated to be a high-purity GIS-type zeolite because no peaks assigned to any other zeolite, amorphous silica/alumina, and the like were observed.

The silica/alumina ratio in the zeolite obtained was calculated with a $^{29}$Si-MAS-NMR spectrum, and as a result, SAR = 6.90 and (a + d)/(b + c) = 0.305 were satisfied. The contents of potassium and lithium in the zeolite satisfied Z/T = 0.99 (= K/T). The adsorption isotherm and the desorption isotherm of CO$_2$ of the GIS-type zeolite obtained were measured, and the amount of adsorption at 760 mmHg was 82.2 cc/g and q(Ad)/q(De) = 0.984 was satisfied. The adsorption isotherm of CH$_4$ was measured in the same manner, and the amount of adsorption at 760 mmHg was 2.2 cc/g.

Forty parts by mass of a powder of the GIS-type zeolite, 48.2 parts by mass of alumina sol (manufactured by Nissan Chemical Corporation, content rate of alumina: 10.5% by mass), and 11.8 parts by mass of a powdery alumina hydrate were mixed. The above mixture was extruded into a columnar shape having a diameter of 3 mm by a wet extrusion granulator MG-55 (manufactured by Dalton Corporation), and then calcined with an electric furnace in an air atmosphere at 350°C for 24 hours, thereby producing a GIS-type zeolite molded article.

Example 1: gas separation method

A gas separation apparatus shown in Figure 1 was used to separate a mixed gas containing nitrogen and carbon dioxide, thereby performing separation and recovery of gas 1 (nitrogen) and gas 2 (carbon dioxide).

Each of the volumes of the carbon dioxide adsorption columns 3a and 3b was 1 L, and the carbon dioxide adsorption columns 3a and 3b used were each one in which Molecular Sieves 13X 1/16 (manufactured by FUJIFILM Wako Pure Chemical Corporation) was packed. A mixed gas including 30% by volume of nitrogen and 70% by volume of carbon dioxide was used. The moisture content in the mixed gas was 120 ppm by volume. An activation step of reducing the pressure of each of the carbon dioxide adsorption columns 3a and 3b to 20 kPa and raising the temperature to 250°C by a heater was performed.

(Operation 1)

The automatic valve AV1 and the automatic valve AV3, among the automatic valves AV1 to AV6 that were all in a closed state, were opened, and the mixed gas at 25°C, which was monitored by a flow meter 11 in a pipe 1 so as to be at a flow rate of 10.0 NL/min, was supplied to the carbon dioxide adsorption column 3a, and the pressure loss of the column 3a was measured with the pressure difference measurement section 41a. After gas distribution was continued for 3 minutes, the automatic valve AV1 and the automatic valve AV3 were closed and at the same time the automatic valve AV2 and the automatic valve AV4 were opened to switch supply of a starting material gas from the carbon dioxide adsorption column 3a to such supply to the column 3b, and the pressure loss of the column 3b was measured with the pressure difference measurement section 41b. The carbon dioxide adsorption column 3a was reduced in pressure by the pressure reducing apparatus 9 with opening of the automatic valve AV5, and thus the manometer 43a of the carbon dioxide adsorption column was set to 5 kPa to perform desorption operation.

The foregoing operation was defined as Operation 1.

(Operation 2)

Subsequently, gas distribution in the carbon dioxide adsorption column 3b was continued for 3 minutes, and thereafter the automatic valve AV2 and the automatic valve AV4 were closed and at the same time the automatic valve AV1 and the automatic valve AV3 were opened to switch supply of a starting material gas from the carbon dioxide adsorption column 3b to such supply to the carbon dioxide adsorption column 3a. The carbon dioxide adsorption column 3b was reduced in pressure by the pressure reducing apparatus 9 with opening of the automatic valve AV6, and thus the manometer 43b of the carbon dioxide adsorption column 3b was set to 2 kPa to perform desorption operation. The foregoing operation was defined as Operation 2.

(Operation 3)

Operations 1 and 2 were repeated 300 times and Operation 1 was performed again, and thus the pressure losses obtained in the pressure difference measurement sections 41a, 41b, 42a, and 42b were respectively 1.5 kPaA, 1.5 kPaA, 0.5 kPaA, and 0.5 kPaA. Thereafter, the apparatus was stopped and the pressure reducing apparatus 9 was opened, and thus no powdery substance was observed.

(Operation 4)

Operations 1 and 2 were repeated 2000 times and Operation 1 was performed again, and thus the pressure losses obtained in the pressure difference measurement sections 41a, 41b, 42a, and 42b were respectively 4.5 kPaA, 4.5 kPaA, 1.8 kPaA, and 1.8 kPaA. Thereafter, the apparatus was stopped and the pressure reducing apparatus 9 was opened, and thus a powdery substance was observed.

(Operation 5)

In order that no powdery substance was observed, the determination value in the management section was defined from the results in Operation 3 and Operation 4 to be 0.45 kPa as a value of the pressure loss during pressure reduction, which was below that of Operation 3, and the state information of the adsorbent was output and displayed in the output section as follows: in a case where the pressure loss $\Delta P_r$ during pressure reduction was less than 0.45 kPa, "Normal" was output and displayed, and in a case where the pressure loss $\Delta P_r$ during pressure reduction was 0.45 kPa or more, "Time for replacement of adsorbing material" was output and displayed. After output of "Time for replacement of adsorbing material", drawing and replacement of Molecular Sieves were carried out and the activation step was carried out, and then Operations 1 and 2 were repeated again. Operations 1 and 2 were repeated 2000 times in total with the management being performed. The pressure losses obtained in the pressure difference measurement section 41a, 41b, 42a, and 42b at the 2000-th operation were respectively 1.3 kPaA, 1.3 kPaA, 0.4 kPaA, and 0.4 kPaA. Thereafter, the apparatus was stopped and the pressure reducing apparatus 9 was opened, and thus no powdery substance was observed.

Example 2: gas separation method

A gas separation apparatus shown in Figure 1 was used to separate a mixed gas including methane and carbon dioxide, thereby performing separation and recovery of gas 1 (methane) and gas 2 (carbon dioxide).
Each of the volumes of the carbon dioxide adsorption columns 3a and 3b was 1 L, and the carbon dioxide adsorption columns 3a and 3b used were each one in which the GIS-type zeolite molded article was packed.
A mixed gas including 60% by volume of methane and 40% by volume of carbon dioxide was used. The moisture content of the mixed gas was 98 ppm by volume.
An activation step of reducing the pressure of each of the carbon dioxide adsorption columns 3a and 3b to 50 kPa and heating the temperature thereof to 200°C by a heater was performed before the following Operation 1.

(Operation 1)

The automatic valve AV1 and the automatic valve AV3, among the automatic valves AV1 to AV6 that were all in a closed state, were opened, and the mixed gas at 25°C, which was monitored by a flow meter 11 in a pipe 1 so as to be at a flow rate of 8.0 NL/min, was supplied to the carbon dioxide adsorption column 3a, and the pressure loss of the column 3a was measured with the pressure difference measurement section 41a. After gas distribution was continued for 3 minutes, the automatic valve AV1 and the automatic valve AV3 were closed and at the same time the automatic valve AV2 and the automatic valve AV4 were opened to switch supply of a starting material gas from the carbon dioxide adsorption column 3a to such supply to the column 3b, and the pressure loss of the column 3b was measured with the pressure difference measurement section 41b. The whole amount of gas flowing out from the carbon dioxide adsorption column 3a until such switching was recovered. (The gas obtained was defined as gas 1 (methane).) The carbon dioxide adsorption column 3a was reduced in pressure by the pressure reducing apparatus 9 with opening of the automatic valve AV5, and thus the manometer 43a of the carbon dioxide adsorption column was set to 2 kPa to perform desorption operation, resulting in recovery of gas from the carbon dioxide adsorption column 3a. (The gas obtained was defined as gas 2 (carbon dioxide).) The temperature of the desorbed gas was 35°C on average. The foregoing operation was defined as Operation 1.

(Operation 2)

Subsequently, gas distribution in the carbon dioxide adsorption column 3b was continued for 3 minutes, and thereafter the automatic valve AV2 and the automatic valve AV4 were closed and at the same time the automatic valve AV1 and the automatic valve AV3 were opened to switch supply of a starting material gas from the carbon dioxide adsorption column 3b to such supply to the carbon dioxide adsorption column 3a. The carbon dioxide adsorption column 3b was reduced in pressure by the pressure reducing apparatus 9 with opening of the automatic valve AV6, and thus the manometer 43b of the carbon dioxide adsorption column 3b was set to 2 kPa to perform desorption operation, resulting in recovery of gas from the carbon dioxide adsorption column 3b. The foregoing operation was defined as Operation 2.

(Operation 3)

Operations 1 and 2 were repeated 100 times and Operation 1 was performed again, thus the pressure losses obtained in the pressure difference measurement sections 41a, 41b, 42a, and 42b were respectively 0.5 kPaA, 0.5 kPaA, 1.0 kPaA, and 1.0 kPaA, the methane concentration in gas 1 obtained was 97.0% by volume (the purity of the gaseous substance A extracted in the adsorption step once was 97.0% by volume), the carbon dioxide concentration in gas 2 was 94.5% by volume (the purity of the carbon dioxide extracted in the desorption step once: 94.5% by volume), the rates of recovery in the second and later adsorption and desorption steps were determined, and the rate of recovery of methane in gas 1 obtained in the adsorption step once was 96.3% and the rate of recovery of carbon dioxide in gas 2 obtained in the desorption step once in the second and later desorption steps was 95.5%.

The whole amounts of gas 1 (methane) and gas 2 (carbon dioxide) obtained in Operations 1 and 2 repeated 100 times were recovered, and the methane concentration and the carbon dioxide concentration were measured in the same manner and thus were respectively 97.0% by volume and 94.5% by volume. The rate of recovery was determined by V2/V1 from the amount V1(NL) of methane supplied during this period and the amount V2(NL) of methane recovered in gas 1, and thus was 96%. The rate of recovery was similarly determined by V4/V3 from the amount V3(NL) of carbon dioxide supplied during this period and the amount V4(NL) of carbon dioxide recovered in gas 2, and thus was 96.3%. The powder removal section 6 was confirmed and thus a powder was collected in the strainer 61a, and the switching valves 62 and 63 were operated for switching to powder collection in the strainer 61b and Operations 1 and 2 were further repeated 100 times. In addition, no change in ultimate pressure during pressure reduction thereafter, from the initial value, was observed.

[Evaluation of rate of embrittlement of adsorbent]

After completion of Operations, the adsorbent was drawn and evaluation of the rate of embrittlement was performed according to the following procedure in order to confirm the state of the adsorbent. (1) The mass W1 of the adsorbent drawn was measured under a N2 atmosphere, and thereafter sieving was made with a sieve having a main aperture dimension of 2.8 mm described and published in JISZ8801-1 and the mass W2 of the adsorbent passing through the sieve was measured. The rate of embrittlement of the adsorbent drawn after Operation 3, as calculated by Expression (1), was 0%.

$$\text{Rate of powderization [\% by mass]} = \frac{W2\ [g]}{W1\ [g]} \times 100 \quad \cdot\cdot\cdot \quad \text{Expression (1)}$$

(Operation 4)

Operations 1 and 2 were repeated 1000 times and then Operation 1 was performed again, thus the pressure losses obtained in the pressure difference measurement sections 41a, 41b, 42a, and 42b were respectively 5.0 kPaA, 5.0 kPaA, 10 kPaA, and 10 kPaA, the methane concentration in gas 1 was 88.6% by volume (the purity of the gaseous substance A extracted in the adsorption step once was 88.6% by volume), the carbon dioxide concentration in gas 2 was 88.2% by volume (the purity of the carbon dioxide extracted in the desorption step once: 88.2% by volume), the rates of recovery in the second and later adsorption and desorption steps were determined, and the rate of recovery of methane in gas 1 obtained in the adsorption step once was 92.7% and the rate of recovery of carbon dioxide in gas 2 obtained in the desorption step once in the second and later desorption steps was 82.0%. After completion of these Operations, the adsorbent was drawn.

The whole amounts of gas 1 (methane) and gas 2 (carbon dioxide) obtained in Operations 1 and 2 repeated 10 times after Operation 4 were recovered, and the methane concentration and the carbon dioxide concentration were measured in the same manner and thus were respectively 88.6% by volume and 88.2% by volume. The rate of recovery was similarly determined by V2/V1 from the amount V1(NL) of methane supplied during this period and the amount V2(NL) of methane recovered in gas 1, and thus was 92.7%. The rate of recovery was determined by V4/V3 from the amount V3(NL) of carbon dioxide supplied during this period and the amount V4(NL) of carbon dioxide recovered in gas 2, and thus was 82.0%. The rate of embrittlement of the adsorbent drawn was evaluated and measured, and thus the rate of embrittlement as 22% and embrittlement of the adsorbing material was confirmed.

(Operation 5)

The predetermined value was calculated with a purity of methane of 95% as a target value. The predetermined value was calculated by use of Expression A with Pa = 101.3 kPaA, Pd = 2.0 kPaA, ΔPf = 0.5, X = 0.95, and Z = 0.01, and was determined in the management section with the predetermined value of the pressure loss ΔPr during pressure reduction being set to 3.1 kPa.

An output in which the pressure loss during pressure reduction exceeded 3 kPa and the state information of the adsorbent molded article indicated the time for replacement of the adsorbing material was obtained at the 391-th operation in total of repeating of Operations 1 and 2.

After drawing and replacement of the adsorbent were carried out and the activation step was carried out, Operations 1 and 2 were again repeated, and thus an output in which the pressure loss during pressure reduction again exceeded 3 kPa and the state information of the adsorbent molded article indicated the time for replacement of the adsorbing material was obtained at the 802-th operation in total. After drawing and replacement of the adsorbent were carried out and the activation step was carried out, Operations 1 and 2 were repeated until the total number of times reached 1000. The methane concentrations in gas 1 at the 391-th operation, the 802-th operation, and the 1001-th operation were respectively 95.1% by volume (the purity of the gaseous substance A extracted in the adsorption step once was 95.1% by volume), 95.1% by volume (the purity of the gaseous substance A extracted in the adsorption step once was 95.1% by volume), and 96.3% by volume (the purity of the gaseous substance A extracted in the adsorption step once was 96.3% by volume), and the carbon dioxide concentrations in gas 2 at these operations were respectively 93.0% by volume (the purity of the carbon dioxide extracted in the desorption step once: 93.0% by volume), 93.0% by volume (the purity of the carbon dioxide extracted in the desorption step once: 94.5% by volume), and 94.3% by volume (the purity of the carbon dioxide extracted in the desorption step once: 94.3% by volume). The rates of recovery of methane in gas 1 obtained in the adsorption step once at the 391-th operation, the 802-th operation, and the 1001-th operation in total of repeating of Operations 1 and 2 were respectively 95.4%, 95.4%, and 96.3%, the rates of recovery of carbon dioxide in gas 2 obtained in the desorption step once in the second and later desorption steps at these operations were respectively 93.0%, 93.0%, and 94.1%.

In Operation 5, after the 391-th operation, the 802-th operation, and the 1001-th operation in total of repeating of Operations 1 and 2, all the methane concentrations in gas 1 (methane) obtained in Operations 1 and 2 similarly repeated 10 times were measured, and thus were respectively 95.1% by volume, 95.1% by volume, and 96.3% by volume. After completion of Operations, the adsorbent was drawn and the rate of embrittlement of the adsorbent drawn was evaluated and measured, and thus embrittlement of the adsorbing material was confirmed at respective rates of embrittlement of 9%, 9%, and 5%.

(Operation 6)

The predetermined value was calculated with a rate of recovery of $CO_2$ of 90% or more as a target value. The predetermined value was determined by measuring the changes over time relating to the data of the rate of recovery of methane and the pressure loss during pressure reduction in repeating of Operations 1 and 2, confirming a rate of recovery of methane of less than 90% in the case of a pressure loss during pressure reduction of more than 5.0 kPa and then setting the determination value in the management section to a pressure loss during pressure reduction of 5.0 kPa, and allowing the state information of the adsorbent, indicating the time for replacement of the adsorbing material, to be output in the output section. After the output, drawing and replacement of the adsorbent were carried out and the activation step was carried out, and then Operations 1 and 2 were again repeated. Operations 1 and 2 were repeated 1000 times in total with the management being performed. A pressure loss during pressure reduction of more than 5 kPa was observed at the 677-th operation in total of repeating of Operations 1 and 2. The methane concentrations in gas 1 at the 677-th operation and the 1001-th operation were respectively 93.1% by volume (the purity of the gaseous substance A extracted in the adsorption step once was 95.1% by volume) and 96.3% by volume (the purity of the gaseous substance A extracted in the adsorption step once was 96.3% by volume) and the carbon dioxide concentrations in gas 2 at these operations were respectively 92.9% by volume (the purity of the carbon dioxide extracted in the desorption step once: 92.9% by volume) and 94.3% by volume (the purity of the carbon dioxide extracted in the desorption step once: 94.3% by volume), and the rates of recovery of methane in gas 1 obtained in the adsorption step once at the 677-th operation and the 1001-th operation in total of repeating of Operations 1 and 2 were respectively 94.5% and 96.3% and the rates of recovery of carbon dioxide in gas 2 obtained in the desorption step once at these operations were respectively 90.0% and 94.1%.

In Operation 6, after the 677-th operation and the 1001-th operation in total of repeating of Operations 1 and 2, the whole gas 2 obtained in Operations 1 and 2 similarly repeated 10 times was recovered, and the rates of recovery as V4/V3 from the amount V3(NL) of carbon dioxide supplied during this period and the amount V4(NL) of carbon dioxide recovered in gas 2 were respectively 90.0% and 94.1%. After completion of Operations, the adsorbent was drawn and the rate of embrittlement of the adsorbent drawn was evaluated and measured, and thus embrittlement of the adsorbing material was confirmed at respective rates of embrittlement of 12% and 5%.

Industrial Applicability

The gas separation method, the method for producing a purified gas, and the gas separation apparatus of the present invention can each produce methane gas purified, with carbon dioxide being recovered from, for example, biogas, and has industrial applicability.

Reference Signs List

1 ... mixed gas supply line, 3a, 3b ... carbon dioxide adsorption column, 5 ... carbon dioxide recovery line, 6 ... powder removal section, 7 ... gaseous substance A recovery line, 9 ... pressure reducing apparatus, 11 ... flow meter, 12 ... moisture meter, 13 ... component analyzer, 31a, 31b ... fixed bed, 40 ... solid concentration, 41a,41b,42a,42b ... pressure difference measurement section, 43a,43b ... manometer, 45 ... management section, 51 ... flow meter, 52 ... moisture meter, 53a, 53b ... manometer, 54 ... component analyzer, 61a,61b ... strainer, 611a, 611b ... strainer housing, 612a, 612b ... filter, 62, 63, 64 ... switching valve, 65 ... differential manometer, 66 ... management section, 71 ... flow meter, 72 ... moisture meter, 73 ... component analyzer, 100, 110, 120 ... gas separation apparatus, 200 ... fermenter, 201 ... blower, 300 ... desulfurization column, 400 ... siloxane removal apparatus, 500 ... oxygen removal apparatus, 600 ... cooling apparatus, 700 ... dehydration apparatus, 800 ... computer, 801 ... processor, 803 ... memory, 805 ... storage device, 811 ... display device, 1000 ... biogas purification system, AV1, AV2, AV3, AV4, AV5, AV6 ... automatic valve

**Claims**

1. A gas separation apparatus that separates carbon dioxide from a mixed gas comprising the carbon dioxide, the gas separation apparatus comprising:

   an adsorption column packed with an adsorbent that adsorbs the carbon dioxide;
   a mixed gas supply line that introduces the mixed gas into the adsorption column;
   a carbon dioxide recovery line that extracts the carbon dioxide from the adsorption column;
   a pressure reducing apparatus that is connected to the carbon dioxide recovery line; and
   a pressure difference measurement section that measures a pressure loss $\Delta P$ due to the adsorption column.

2. The gas separation apparatus according to claim 1, wherein the carbon dioxide recovery line has a powder removal section between the adsorption column and the pressure reducing apparatus.

3. The gas separation apparatus according to claim 1, further comprising a management section,
   wherein the management section has:

   a determination section that determines whether the pressure loss $\Delta P$ exceeds a predetermined value; and
   an output section that outputs state information of the adsorbent in a case where the pressure loss $\Delta P$ exceeds the predetermined value in the determination section.

4. The gas separation apparatus according to claim 3, wherein the pressure loss $\Delta P$ corresponds to a pressure loss $\Delta Pf$ during mixed gas introduction.

5. The gas separation apparatus according to claim 4, wherein the pressure difference measurement section measures the pressure loss $\Delta Pf$ from a pressure difference between a pressure $P_1$ of the adsorption column on a side of the mixed gas supply line and a pressure $P_2$ of the adsorption column on an opposite side of the mixed gas supply line.

6. The gas separation apparatus according to claim 4, wherein the predetermined value is 50 kPa or less.

7. The gas separation apparatus according to claim 3, wherein the pressure loss $\Delta P$ corresponds to a pressure loss $\Delta Pr$

during pressure reduction.

8. The gas separation apparatus according to claim 7, wherein the pressure difference measurement section measures the pressure loss $\Delta Pr$ from a pressure difference between a pressure $P_3$ of the adsorption column on a side of the carbon dioxide recovery line and a pressure $P_4$ of the adsorption column on an opposite side of the carbon dioxide recovery line.

9. The gas separation apparatus according to claim 7, wherein the predetermined value is 10 kPa or less.

10. The gas separation apparatus according to claim 3, wherein the pressure loss $\Delta P$ corresponds to a pressure loss $\Delta Pf$ during mixed gas introduction and a pressure loss $\Delta Pr$ during pressure reduction.

11. The gas separation apparatus according to claim 10, wherein the pressure difference measurement section measures:

the pressure loss $\Delta Pf$ from a pressure difference between a pressure $P_1$ of the adsorption column on a side of the mixed gas supply line and a pressure $P_2$ of the adsorption column on an opposite side of the mixed gas supply line; and

the pressure loss $\Delta Pr$ from a pressure difference between a pressure $P_3$ of the adsorption column on a side of the carbon dioxide recovery line and a pressure $P_4$ of the adsorption column on an opposite side of the carbon dioxide recovery line.

12. The gas separation apparatus according to claim 10, wherein

the pressure loss $\Delta P$ corresponds to a pressure loss $\Delta Pf$ during mixed gas introduction and a pressure loss $\Delta Pr$ during pressure reduction, and

the output section outputs the state information of the adsorbent in a case where the pressure loss $\Delta Pf$ or the pressure loss $\Delta Pr$ exceeds the predetermined value.

13. The gas separation apparatus according to claim 1,

wherein the mixed gas comprises a gaseous substance A different from the carbon oxide, and
the gas separation apparatus

comprises a gaseous substance A recovery line that extracts the gaseous substance A from the adsorption column, and
separates the carbon dioxide and the gaseous substance A.

14. The gas separation apparatus according to claim 1, wherein the adsorbent comprises zeolite.

15. The gas separation apparatus according to claim 14, wherein the zeolite is an FAU-type zeolite or a GIS-type zeolite.

16. The gas separation apparatus according to claim 1, wherein an adsorption selectivity of the carbon dioxide/the gaseous substance A of the adsorbent is 8 or more.

17. A method for managing a gas separation apparatus that separates carbon dioxide from a mixed gas comprising the carbon dioxide,

wherein the gas separation apparatus comprises:

an adsorption column packed with an adsorbent that adsorbs the carbon dioxide;
a mixed gas supply line that introduces the mixed gas into the adsorption column;
a carbon dioxide recovery line that extracts the carbon dioxide from the adsorption column;
a pressure reducing apparatus that is connected to the carbon dioxide recovery line;
a pressure difference measurement section that measures a pressure loss $\Delta P$ due to the adsorption column; and
a management section,

wherein the method comprises:

a determination step of determining whether the pressure loss $\Delta P$ exceeds a predetermined value; and
an output step of outputting state information of the adsorbent in a case where the pressure loss $\Delta P$ exceeds the predetermined value in the determination step.

18. The method for managing the gas separation apparatus according to claim 17, wherein the pressure loss $\Delta P$ corresponds to a pressure loss $\Delta P_f$ during mixed gas introduction.

19. The method for managing the gas separation apparatus according to claim 18, wherein the predetermined value is 10 kPa or less.

20. The method for managing the gas separation apparatus according to claim 17, wherein the pressure loss $\Delta P$ corresponds to a pressure loss $AP_r$ during pressure reduction.

21. The method for managing the gas separation apparatus according to claim 20, wherein the predetermined value is 5 kPa or less.

22. The method for managing the gas separation apparatus according to claim 17, wherein the pressure loss $\Delta P$ corresponds to a pressure loss $\Delta P_f$ during mixed gas introduction and a pressure loss $\Delta P_r$ during pressure reduction.

23. The method for managing the gas separation apparatus according to claim 17, wherein the pressure loss $\Delta P$ corresponds to a pressure loss $\Delta P_f$ during mixed gas introduction and a pressure loss $AP_r$ during pressure reduction, and the output step outputs the state information of the adsorbent in a case where the pressure loss $\Delta Pf$ or the pressure loss $\Delta Pr$ exceeds the predetermined value.

24. A gas separation method for separating carbon dioxide from a mixed gas comprising the carbon dioxide using an adsorption column packed with an adsorbent, the method comprising:

an adsorption step of introducing the mixed gas into the adsorption column to allow the carbon dioxide to be adsorbed onto the adsorbent; and
a desorption step of exhausting the carbon dioxide under reduced pressure from the adsorption column, to extract the carbon dioxide from the adsorbent, wherein the adsorption step and/or the desorption step are/is carried out with a pressure loss $\Delta P$ due to the adsorption column being measured.

25. The gas separation method according to claim 24,

wherein the mixed gas comprises a gaseous substance A different from the carbon oxide, and
the gaseous substance A is extracted in the adsorption step.

26. A method for producing a purified gas, comprising obtaining purified carbon dioxide by the gas separation method according to claim 24.

27. A method for producing a purified gas, comprising obtaining a purified gaseous substance A by the gas separation method according to claim 25.

[Figure 1]

[Figure 2]

[Figure 3]

3a

PRESSURE

$P_a$

$P_b$

$C_1$   $C_2$   $C_3$   $C_4$   $C_5$

$T_{1a}$   $T_{1b}$   $T_{1c}$   $T_{1d}$   $T_{1e}$

TMIE

3b

PRESSURE

$P_a$

$P_b$

$C_1$   $C_2$   $C_3$   $C_4$   $C_5$

$T_{1b}$   $T_{1e}$

TMIE

[Figure 4]

| PRESSURE LOSS △Pr ACQUIREMENT SECTION | 451 |
| PRESSURE LOSS △PF ACQUIREMENT SECTION | 452 |
| DETERMINATION SECTION | 454 |
| INFORMATION GENERATION SECTION | 455 |
| OUTPUT SECTION | 456 |

[Figure 5]

[Figure 6]

[Figure 7]

```
S201 ──⌇  ┌─────────────────────────────────┐ ◄──┐
          │  ACQUIRE PRESSURE LOSS  ΔPr     │    │
          └─────────────────────────────────┘    │
                          │                       │
                          ▼                       │
                    ╱─────────────╲          No   │
S202 ──⌇         ╱  EXCEED          ╲ ──────────┘
                 ╲  PREDETERMINED   ╱
                  ╲  VALUE        ╱
                    ╲───────────╱
                        │ Yes
                        ▼
S203 ──⌇  ┌─────────────────────────────────┐
          │  GENERATE  STATE  INFORMATION   │
          │        OF  ADSORBENT            │
          └─────────────────────────────────┘
                        │
                        ▼
S204 ──⌇  ┌─────────────────────────────────┐
          │  OUTPUT  STATE  INFORMATION     │
          │        OF  ADSORBENT            │
          └─────────────────────────────────┘
```

[Figure 8]

```
S301 ──⌇  ┌─────────────────────────────────┐ ◄──┐
          │  ACQUIRE PRESSURE LOSS  ΔPf     │    │
          └─────────────────────────────────┘    │
                          │                       │
                          ▼                       │
                    ╱─────────────╲          No   │
S302 ──⌇         ╱  EXCEED          ╲ ──────────┘
                 ╲  PREDETERMINED   ╱
                  ╲  VALUE        ╱
                    ╲───────────╱
                        │ Yes
                        ▼
S303 ──⌇  ┌─────────────────────────────────┐
          │  OUTPUT  STATE  INFORMATION     │
          │        OF  ADSORBENT            │
          └─────────────────────────────────┘
```

[Figure 9]

S401 — ACQUIRE PRESSURE LOSS ΔPf

S402 — EXCEED PREDETERMINED VALUE — No

Yes

S403 — GENERATE STATE INFORMATION OF ADSORBENT

S404 — OUTPUT STATE INFORMATION OF ADSORBENT

[Figure 10]

1000

200

201

400

300

700

500

600

100

$CH_4$

$CO_2$

# EP 4 691 600 A1

<table>
<tr><td colspan="2">INTERNATIONAL SEARCH REPORT</td><td colspan="2">International application No.<br><br>**PCT/JP2024/012358**</td></tr>
</table>

**A. CLASSIFICATION OF SUBJECT MATTER**

*B01D 53/047*(2006.01)i; *B01J 20/18*(2006.01)i; *B01J 20/34*(2006.01)i; *C01B 32/50*(2017.01)i
FI:    B01D53/047; B01J20/18 A; B01J20/34 E; B01J20/34 Z; C01B32/50

According to International Patent Classification (IPC) or to both national classification and IPC

**B.    FIELDS SEARCHED**

Minimum documentation searched (classification system followed by classification symbols)

B01D53/047; B01J20/18; B01J20/34; C01B32/50

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)


**C.    DOCUMENTS CONSIDERED TO BE RELEVANT**

| Category* | Citation of document, with indication, where appropriate, of the relevant passages | Relevant to claim No. |
|---|---|---|
| A | JP 61-176540 A (AIR PROD AND CHEM INC.) 08 August 1986 (1986-08-08) | 1-27 |
| A | JP 2015-67504 A (TAIYO NIPPON SANSO CORPORATION) 13 April 2015 (2015-04-13) | 1-27 |
| A | JP 58-146419 A (LINDE AG) 01 September 1983 (1983-09-01) | 1-27 |
| A | JP 55-35996 A (PALL CORPORATION) 13 March 1980 (1980-03-13) | 1-27 |
| A | JP 8-24553 A (NIPPONDENSO CO., LTD.) 30 January 1996 (1996-01-30) | 1-27 |
| A | JP 2020-54979 A (HITACHI INDUSTRIAL EQUIPMENT SYSTEMS CO., LTD.) 09 April 2020 (2020-04-09) | 1-27 |
| A | JP 2009-82782 A (HITACHI, LTD.) 23 April 2009 (2009-04-23) | 1-27 |
| P, A | JP 2023-66185 A (TOYOTA JIDOSHA KABUSHIKI KAISHA) 15 May 2023 (2023-05-15) | 1-27 |
| P, A | JP 2024-018448 A (ASAHI KASEI KABUSHIKI KAISHA) 08 February 2024 (2024-02-08) | 1-27 |

☑ Further documents are listed in the continuation of Box C.          ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **10 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

35

**INTERNATIONAL SEARCH REPORT**

| International application No. |
| --- |
| **PCT/JP2024/012358** |

## C. DOCUMENTS CONSIDERED TO BE RELEVANT

| Category* | Citation of document, with indication, where appropriate, of the relevant passages | Relevant to claim No. |
| --- | --- | --- |
| P, A | JP 2024-018456 A (ASAHI KASEI KABUSHIKI KAISHA) 08 February 2024 (2024-02-08) | 1-27 |

Form PCT/ISA/210 (second sheet) (July 2022)

## INTERNATIONAL SEARCH REPORT
### Information on patent family members

International application No.

**PCT/JP2024/012358**

| Patent document cited in search report | | | Publication date (day/month/year) | Patent family member(s) | | | Publication date (day/month/year) |
|---|---|---|---|---|---|---|---|
| JP | 61-176540 | A | 08 August 1986 | EP | 193716 | A2 | |
| JP | 2015-67504 | A | 13 April 2015 | (Family: none) | | | |
| JP | 58-146419 | A | 01 September 1983 | EP | 86436 | A1 | |
| | | | | DE | 3205505 | A1 | |
| JP | 55-35996 | A | 13 March 1980 | US | 4197095 | A | |
| | | | | EP | 9139 | A1 | |
| JP | 8-24553 | A | 30 January 1996 | (Family: none) | | | |
| JP | 2020-54979 | A | 09 April 2020 | (Family: none) | | | |
| JP | 2009-82782 | A | 23 April 2009 | (Family: none) | | | |
| JP | 2023-66185 | A | 15 May 2023 | (Family: none) | | | |
| JP | 2024-018448 | A | 08 February 2024 | (Family: none) | | | |
| JP | 2024-018456 | A | 08 February 2024 | (Family: none) | | | |

Form PCT/ISA/210 (patent family annex) (July 2022)

**REFERENCES CITED IN THE DESCRIPTION**

**Patent documents cited in the description**

- JP 2015067504 A